# EUROPEAN PATENT SPECIFICATION

(11) **EP 1 125 346 B1**
(45) Date of publication and mention of the grant of the patent: **19.06.2002**
(21) Application number: 99971212.8
(22) Date of filing: 29.10.1999
(51) Int. Cl.: H01S 3/067

(54) **POLARIZATION AND WAVELENGTH STABLE SUPERFLUORESCENT SOURCES**
POLARISATIONS- UND WELLENLÄNGENSTABILE SUPERFLUORESZENZ-LICHTQUELLEN
SOURCES SUPERFLUORESCENTES A POLARISATION ET LONGUEUR D'ONDE STABLES

(30) Priority: 31.10.1998 US 106532 P; 02.11.1998 US 106709 P; 22.12.1998 US 113220 P; 09.04.1999 US 128641 P
(43) Date of publication of application: 22.08.2001
(73) Proprietor: THE BOARD OF TRUSTEES OF THE LELAND STANFORD JUNIOR UNIVERSITY, Stanford, California 94305 (US)
(72) Inventor: FALQUIER, Dario G., Menlo Park, CA 94025 (US); DIGONNET, Michel, J.F., Palo Alto, CA 944306 (US); SHAW, H., John, Stanford, CA 94305 (US)
(74) Representative: Mackenzie, Andrew Bryan
(86) International application number: US9925482
(87) International publication number: WO0035058

(56) References cited:
- EP-A- 0 848 464
- HALL D C ET AL: "HIGH-STABILITY ER3+-DOPED SUPERFLUORESCENT FIBER SOURCES" JOURNAL OF LIGHTWAVE TECHNOLOGY,US,IEEE. NEW YORK, vol. 13, no. 7, 1 July 1995 (1995-07-01), pages 1452-1460, XP000597669 ISSN: 0733-8724
- PATRICK H J ET AL: "ERBIUM-DOPED SUPERFLUORESCENT FIBRE SOURCE WITH LONG PERIOD FIBRE GRATING WAVELENGTH STABILISATION" ELECTRONICS LETTERS,GB,IEE STEVENAGE, vol. 33, no. 24, 20 November 1997 (1997-11-20), pages 2061-2063, XP000734308 ISSN: 0013-5194
- KATSUMI IWATSUKI: "ER-DOPED SUPERFLUORESCENT FIBER LASER PUMPED BY 1.48 M LASER DIODE" IEEE PHOTONICS TECHNOLOGY LETTERS,US,IEEE INC. NEW YORK, vol. 2, no. 4, 1 April 1990 (1990-04-01), pages 237-238, XP000114746 ISSN: 1041-1135
- WAGENAR J L ET AL: "A MUELLER MATRIX FORMALISM FOR MODELING POLARIZATION EFFECT IN ERBIUM-DOPED FIBER" JOURNAL OF LIGHTWAVE TECHNOLOGY,US,IEEE. NEW YORK, vol. 16, no. 2, 1 February 1998 (1998-02-01), pages 200-206, XP000750658 ISSN: 0733-8724 cited in the application
- WAGENER J L ET AL: "A HIGH-STABILITY FIBER AMPLIFIER SOURCE FOR THE FIBER OPTIC GYROSCOPE" JOURNAL OF LIGHTWAVE TECHNOLOGY,US,IEEE. NEW YORK, vol. 15, no. 9, 1 September 1997 (1997-09-01), pages 1689-1694, XP000734011 ISSN: 0733-8724 cited in the application
- FALQUIER ET AL.: "Polarization dependence of the mean wavelength of Er-doped superfluorescent fiber sources " PROC. SPIE, CONFERENCE ON DOPED FIBER DEVICES II, BOSTON, MA, USA, 2-3 NOV. 1998, vol. 3542, pages 26-29, XP000915537

## Description

### Background of the Invention

### Field of the Invention

The present invention relates to fiber amplified spontaneous emission (ASE) light sources, and more particularly, to superfluorescent fiber sources that have a stable mean wavelength with respect to changes in pump polarization.

### Description of the Related Art

Fiber ASE light sources are well known in the art. ASE sources have been advantageously used to provide wideband (e.g., on the order of 10 to 30 nanometers), spatially coherent light for multiple applications. For example, ASE sources have been used to provide laser light as an input to a fiberoptic gyroscope. For a description of an exemplary superfluorescent fiber source, see an article entitled "Amplification of Spontaneous Emission in Erbium-Doped Single-Mode Fibers" by Emmanuel Desurvire and J.R. Simpson, published by IEEE, in "Journal of Lightwave Technology", Vol. 7, No. 5, May 1989.

An ASE light source typically comprises a length of single-mode fiber, with a portion of its cross-section (typically the core) doped with an ionic, trivalent rare-earth element. For example, neodymium (Nd³⁺) and erbium (Er³⁺) are rare-earth elements that may be used to dope the core of a single-mode fiber so that it acts as a laser medium.

The fiber receives a pump input signal at one end. The pump signal is typically a laser signal having a relatively narrow spectrum centered around a wavelength λₚ.

The ions within the fiber core absorb the input laser radiation at wavelength λₚ so that electrons in the ground state of these ions are excited to a higher energy state of the ions. When a sufficient pump power is input into the end of the fiber, a population inversion is created (i.e., more electrons within the ions are in the excited state than are in the lower laser state), and a significant amount of fluorescence is generated along the length of the fiber. As is well known, the fluorescence (i.e., the emission of photons at a different wavelength λₛ) is due to the spontaneous return of electrons from the excited state to the lower laser state so that a photon at a wavelength λₛ is emitted during the transition from the excited state to the ground state. These photons are amplified by the gain as they travel down the fiber, leading to amplified spontaneous emission (ASE). The light which is emitted at the wavelength λₛ from the fiber is highly directional light, as in conventional laser light. However, one main characteristic of this emission which makes it different from that of a traditional laser (i.e., one which incorporates an optical resonator) is that the spectral content of the light emitted from the superfluorescent fiber source is generally very broad (typically several tens of nanometers). This principle is well known in laser physics, and has been studied experimentally and theoretically in silica-based fibers doped with erbium, neodymium, or other rare earths, for several years.

Light emitted from ASE fiber sources has multiple applications. For example, in one application, the output of the ASE source is fed into a fiberoptic gyroscope. For reasons that are well understood by those skilled in the art, the fiberoptic gyroscope should be operated with a broadband source which has a highly stable mean wavelength. Of the several types of broadband sources known to exist, superfluorescent fiber sources, in particular, made with erbium-doped fiber, have been thus far the only optical sources which meet the stringent requirements for inertial navigation grade fiberoptic gyroscopes. The broad bandwidth of light produced by erbium-doped fiber sources, together with the low pump power requirements and excellent mean wavelength stability of erbium-doped fiber sources, are the primary reasons for use of such sources with fiberoptic gyroscopes.

In an erbium-doped fiber, the emission of a superfluorescent fiber source is bidirectional. That is, the light which is emitted by the return of electrons to the ground state in the erbium ions is typically emitted out of both ends of the fiber. As described in U.S. Patent No. 5,185,749, to Kalman, et al., for erbium-doped fibers of sufficient length, the light propagated in the backward direction (i.e., in the direction opposite that in which the pump signal propagates) has a very high efficiency. Thus, it is advantageous to implement erbium-doped sources so that the light emitted from the ASE erbium-doped source is emitted from the pump input end of the fiber (i.e., in the backward propagation direction).

An ASE source is generally implemented in one of two configurations. In a first configuration, called a single-pass ASE source, the superfluorescent source output power is emitted in two directions, one of which is not used. In the second configuration, called a double-pass ASE source, a reflector is placed at one end of the doped fiber to reflect the superfluorescent source signal so that the superfluorescent signal is sent a second time through the fiber. Since the fiber exhibits gain at the superfluorescent signal wavelengths, the ASE signal is further amplified. One advantage of the double-pass configuration is that it produces a stronger signal. A double-pass ASE source configuration also produces output only at one port (i.e., in one direction). A disadvantage of such a configuration is that the feedback optical signal from the gyroscope must be kept very low in order to prevent lasing (e.g., with use of an optical isolator located between the source and the gyroscope).

For fiberoptic gyroscope applications, one critical measure of source performance is the stability of the source mean wavelength (for example, see U.S. Patent No. 5,355,216 to Kim, et al.). As is well known in the art, stability of the source mean wavelength leads directly to the stability of the gyroscope scale factor. Precise knowledge of the scale factor is critical for an accurate measurement of the rotation rate of the gyroscope. Presently, superfluorescent fiber sources exist which have a mean wavelength stability with respect to pump power, pump wavelength, temperature, and level of optical feedback down to a few parts per million each, assuming reasonable stabilization of system parameters such as pump wavelength, pump power, temperature and optical feedback from the gyroscope. However, an overall stability of better than one part per million in mean wavelength is desirable for some applications, in particular, high-grade fiberoptic gyroscopes.

Polarization effects have recently been shown to play a role in the instability of the mean wavelength of superfluorescent fiber sources (SFS). The polarization dependence of the mean wavelength of an SFS output has been predicted through numerical modeling by J.L. Wagener, et al. [see J.L. Wagener, "Erbium doped fiber . sources and amplifiers for optical sensors," Ph.D. thesis, Applied Physics Department, Stanford University (March 1996); J.L. Wagener, M.J.F. Digonnet, and H.J. Shaw, "A High-Stability Fiber Amplifier Source for the Fiber Optic Gyroscope," *J. Lightwave Technol.* Vol. 15, 1689-1694 (September 1997); and J.L. Wagener, D.G. Falquier, M.J.F. Digonnet, and H.J. Shaw, "A Mueller Matrix Formalism for Modeling Polarization Effects in Erbium-Doped Fiber," *J. Lightwave Technol.* Vol. 16, 200-206 (February 1998)]. These studies have shown that the mean wavelength of the SFS depends slightly on pump polarization. The reason for this can be explained in physical terms as follows. The ions of erbium (or another dopant, such as Nd or another rare earth) in the fiber host experience an intrinsic anisotropy of absorption and emission with respect to polarization. For example, some erbium ions more strongly absorb a given polarization than others, and correspondingly, these erbium ions have a preferred polarization associated with their emission. This effect gives rise to polarization-dependent gain when the erbium-doped fiber is pumped in the usual manner, i.e., by a highly polarized source such as a laser diode. This in turn can result in orthogonal polarization components of the output ASE signal having different mean wavelengths.

### Summary of the Invention

A first embodiment of the invention is a superfluorescent source that includes an optical pump source that generates optical radiation that is substantially unpolarized and an optically active solid state medium (e.g., a solid state laser medium) that is pumped by the substantially unpolarized optical radiation. The medium has characteristics selected to generate superfluorescence having a full width at half maximum (FWHM) of at least 2 nm and a mean wavelength that is stable to within 50 ppm against (i.e., even in the presence of) polarization fluctuations in the superfluorescent source. In one preferred embodiment, the superfluorescence has a mean wavelength that is stable to within 3 ppm in the presence of polarization fluctuations in the superfluorescent source. In a preferred embodiment, the mean wavelength is stable to within 50 ppm in the presence of birefringence changes in the superfluorescent source. In one preferred embodiment, the mean wavelength is stable to within 50 ppm in the presence of polarization changes of the optical radiation from the optical pump source.

Another embodiment of the invention is a superfluorescent source that includes an optical pump source that generates optical radiation that is substantially unpolarized and an optically active solid state medium (e.g., laser medium) that is pumped by the substantially unpolarized optical radiation. The medium has characteristics selected to generate superfluorescence having a full width at half maximum (FWHM) of at least 2 nm and a mean wavelength that is stable to within 50 ppm even in the presence of polarization changes in the source that range over the Poincaire sphere.

Yet another embodiment is a superfluorescent source that includes an optical pump source that generates optical radiation that is substantially unpolarized. The optical pump source includes a plurality of pumps that generate respective optical outputs, a polarization mixer that receives the respective optical outputs from the plurality of pumps and generates optical output (in which the respective optical outputs from the plurality of pumps have polarizations selected such that optical output from the mixer is substantially unpolarized), and a depolarizer that receives the optical output from the polarization mixer. The embodiment further includes an optically active solid state medium (e.g., laser medium) that is pumped by the output from the depolarizer, in which the medium has characteristics selected to generate superfluorescence having a full width at half maximum (FWHM) of at least 2 nm and a mean wavelength that is stable in the presence of polarization fluctuations in the superfluorescent source. In a preferred embodiment, the superfluorescent source has a mean wavelength that is stable to within 500 ppm in the presence of polarization fluctuations in the superfluorescent source. In a more preferred embodiment, the mean wavelength is stable to within 100 ppm in the presence of polarization fluctuations in the superfluorescent source. In a still more preferred embodiment, the mean wavelength is stable to within 50 ppm in the presence of polarization fluctuations in the superfluorescent source. In a most preferred embodiment, the mean wavelength is stable to within 3 ppm in the presence of polarization fluctuations in the superfluorescent source. In one preferred embodiment, the plurality of pumps includes two pumps having respective optical outputs whose polarizations are combined so that their polarizations are orthogonal to each other. In a preferred embodiment, the mean wavelength is stable to within 500 ppm in the presence of birefringence changes in the superfluorescent source. In one preferred embodiment, the mean wavelength is stable to within 500 ppm in the presence of polarization changes of the optical radiation from the optical pump source.

Yet another preferred embodiment is a method of generating superfluorescence, which includes providing a plurality of optical pumps having respective optical outputs with different polarizations, directing the respective optical outputs through a polarization mixer that produces optical output (in which the different polarizations are selected so that the optical output from the mixer is substantially unpolarized), depolarizing the output from the mixer, injecting the depolarized output into an optically active solid state medium (e.g., laser medium), and producing superfluorescence from the medium that has a mean wavelength that is stable in the presence of polarization fluctuations in the superfluorescent source.

In a preferred embodiment, the wavelength is stable to within 500 ppm in the presence of polarization fluctuations in the superfluorescent source. In a preferred embodiment, the plurality of optical pumps includes two pumps having respective optical outputs combined so that their polarizations are orthogonal to each other.

Yet another embodiment is a method of generating superfluorescence, comprising providing an optically active medium (e.g., laser medium) having first and second ends, pumping the first end of the medium with optical output from a first optical pump (in which the output from the first optical pump has a first power and a first polarization), and pumping the second end of the medium with optical output from a second optical pump (in which the output from the second optical pump has a second power and a second polarization different from the first polarization). The method further includes producing optical output from the first end of the medium that comprises a first spectral component having a first mean wavelength and a polarization parallel to the first polarization, and a second spectral component having a second mean wavelength and a polarization orthogonal to the first polarization. The method also includes selecting the first pump power and the second pump power so as to substantially reduce the polarization dependent gain that would be present if the first power were equal to the second power, so that the difference between the mean wavelength of the first spectral component and the mean wavelength of the second spectral component is substantially reduced. In a preferred embodiment, the first polarization and the second polarization axe orthogonal. In one preferred embodiment, the second power is selected to be less than the first power.

Another embodiment of the invention is a device that includes an optical pump that produces polarized optical output. The source further includes an optically active, solid state medium (e.g., laser medium) that receives the polarized optical output, in which the medium has birefringence axes that receive equal amounts of pump power to reduce polarization dependent gain effects within the medium. The medium produces optical output that has substantially the same mean wavelength for all polarizations. The device further includes a fiber optic gyroscope that receives the optical output from the medium.

Yet another embodiment of the invention is a method of generating superfluorescent optical output that includes outputting a polarized optical signal from a pump source (in which the polarized optical signal has a polarization axis), inputting the polarized optical signal into an optically active, solid state medium (e.g., laser medium) that has birefringence axes, and orienting the birefringence axis of the solid state medium at about 45 degrees with respect to the polarization axis of the polarized optical output to reduce polarization dependent gain effects within the medium such that the solid state medium produces a superfluorescent optical output that has substantially the same mean wavelength for all polarizations.

Still another embodiment of the invention is a method of generating superfluorescent output from a superfluorescence source that includes providing an optical pump which generates optical output and directing the optical output into a polarization mixer which generates a first output signal and a second output signal (in which the two output signals have respective intensities and different polarizations). The first ouput signal is directed into a first end of an optically active solid state medium (e.g., laser medium), and the second output signal is directed into a second end of the optically active solid state medium. Optical gain is produced in the solid state medium that is substantially independent of polarization to generate optical output from one end of the solid state medium whose mean wavelength is stable even in the presence of polarization fluctuations in the superfluorescent source. In a preferred embodiment, the gain that is substantially independent of polarization is produced by selecting the intensities of the first and second output signals.

### Brief Description of the Drawings

FIGURE 1 shows an experimental setup for investigating the variations in the mean wavelength of a superfluorescent fiber source as the polarization of the optical pump is varied with a polarization controller located at the output end of the optical pump.

FIGURE 2 presents data collected with the setup shown in FIGURE 1.

FIGURE 3 shows an experimental setup similar to that of FIGURE 1, except that a depolarizer is used at the output end of the optical pump.

FIGURE 4, comprising FIGURES 4A, 4B, 4C, and 4D, presents data showing the variations in the mean wavelength of a superfluorescent fiber source as polarization is varied for the experimental setups of FIGURES 5 and 9B.

FIGURE 5 shows an experimental setup for investigating the range of mean wavelengths from a superfluorescent fiber source as the polarization of the optical pump is varied, in which a polarization controller has been placed at the output end of the optical pump.

FIGURE 6 shows typical transmission spectra from a Lyot depolarizer that comprise a nearly periodic series of maxima and minima.

FIGURE 7 shows the spectral output from a hypothetical light source to illustrate the behavior of the Lyot depolarizer of FIGURE 6.

FIGURE 8 shows an embodiment having an output whose mean wavelength is stable with respect to external perturbations, in which linearly polarized pump light is coupled directly into a depolarizer made from high birefringence fiber.

FIGURE 9A shows an embodiment in which a second depolarizer, such as a Lyot depolarizer, is advantageously added downstream from a WDM coupler.

FIGURE 9B shows an experimental setup for investigating the range of mean wavelengths from a superfluorescent fiber source as a function of polarization, and in particular, the effect that a wavelength division multiplexing (WDM) coupler may have on that range when the WDM has some polarization dependence.

FIGURE 9C shows an embodiment that comprises a fiber optic gyroscope and up to three depolarizers located at various points in the device.

FIGURE 10 shows an experimental setup for assessing the effectiveness of depolarizers in reducing variations in the mean wavelength of an SFS due to environmental perturbations, such as temperature variations, in which an erbium-doped fiber is placed in a water bath.

FIGURE 11 shows experimental results obtained with experimental setup of FIGURE 10, in which the mean wavelength of the source is plotted versus time.

FIGURE 12A shows an embodiment for reducing the pump polarization dependence of the source mean wavelength, in which the superfluorescent source is pumped with two linearly polarized pump sources with substantially the same spectrum and polarization, in a backward configuration.

FIGURE 12B shows an embodiment for reducing the pump polarization dependence of the source mean wavelength which employs two linearly polarized pump sources in a forward configuration.

FIGURE 12C shows an embodiment for reducing the pump polarization dependence of the source mean wavelength which employs two linearly polarized pump sources in a double-pass configuration.

FIGURE 12D shows an embodiment that is similar to the embodiment of FIGURE 12C except that a depolarizer has been added.

FIGURE 13A shows an embodiment for reducing the pump polarization dependence of the source mean wavelength, in which the superfluorescent fiber source is bidirectionally pumped.

FIGURE 13B presents the results of a simulation corresponding to the embodiment of FIGURE 13A, in which the power of the left pump is fixed at 30 mW, and the mean wavelength difference between polarizations of the amplified spontaneous emission (ASE) traveling from left to right is plotted as a function of the power of the right pump.

FIGURE 13C presents the results of a simulation corresponding to the embodiment of FIGURE 13A, in which the power of the left pump is fixed at 30 mW, and the mean wavelength difference between polarizations of the amplified spontaneous emission (ASE) traveling from right to left is plotted as a function of the power of the right pump.

FIGURE 14A shows an embodiment for producing a stable spectrum and mean wavelength from a superfluorescent fiber source (backward configuration) that utilizes polarization maintaining optical components.

FIGURE 14B shows a fiber optic gyroscope embodiment based on the polarization maintaining design of FIGURE 14A.

FIGURE 14C shows a fiber optic gyroscope embodiment similar to that of FIGURE 14B, except that a polarizer has been added to the superfluorescent fiber.

FIGURE 15 shows a double pass configuration for reducing the pump polarization dependence of the source mean wavelength, which utilizes polarization maintaining components.

FIGURE 16 shows a backward source configuration for reducing the pump polarization dependence of the source mean wavelength, which utilizes polarization maintaining components and a WDM coupler whose birefringence axes are aligned at 45 degrees to the polarization of the pump.

FIGURE 17 shows a double pass source configuration for reducing the pump polarization dependence of the source mean wavelength, which utilizes polarization maintaining components and a WDM coupler whose birefringence axes are aligned at 45 degrees to the polarization of the pump.

FIGURE 18 shows another double pass source configuration for reducing the pump polarization dependence of the source mean wavelength, which utilizes polarization maintaining components and a WDM coupler whose birefringence axes are aligned at 45 degrees to the polarization of the pump.

FIGURE 19 shows a configuration for reducing the pump polarization dependence of the superfluorescent source mean wavelength which utilizes a single pump source.

### Detailed Description of the Preferred Embodiments

The present invention is described below in connection with optical waveguides in the form of optical fibers. It should be understood that other types of optical waveguides can be advantageously substituted for the optical fibers in many of the embodiments described herein. The term "solid state" as used herein includes optical waveguides such as optical fibers.

The intrinsic anisotropy of erbium ions in a host such as silica and the high degree of polarization of a laser pump source result in polarization-dependent gain. Although this effect is small, it has significant deleterious effects in optical communication systems utilizing multiple erbium-doped fiber amplifiers, and, for these applications, the polarization dependence of the gain should be reduced. Polarization-dependent gain may also play a deleterious role in a superfluorescent fiber source. The reason is that the mean wavelength of the source is affected, through polarization-dependent gain, by the pump polarization. Typically, the rotation sensing coil within a fiber optic gyroscope is preceded (in the optical path sense) by a polarizer. Thus, if the polarization of the pump entering the erbium-doped fiber drifts as a result of environmental changes (changes in the fiber birefringence induced by variations in temperature, or variations in the orientation of the fiber, will change the state of polarization (SOP) of the light in the erbium-doped fiber), the mean wavelength entering the gyro coil varies, as does the gyro scale factor. As discussed earlier, such effects are highly undesirable in fiber optic gyroscope (FOG) applications, in particular in high-grade gyros, in which an SFS source with mean wavelength variations under one part per million (ppm) is required.

It is one object of this invention to reduce the instability of the mean wavelength of a superfluorescent fiber source (SFS). In one embodiment of the invention, the polarization of a pump source of a superfluorescent fiber source is made more random, leading to greater stability of the mean wavelength of the SFS. Using one or more depolarizers at the output of the pump source as well as at other locations in the SFS dramatically reduces the SFS output spectrum dependence on polarization, so that polarization drift of the pump, or the superfluorescence (e.g., due to changes in the birefringence of optical components in the SFS), or both, are inconsequential. In another embodiment of the invention, the polarization of optical radiation throughout the device is kept substantially constant by using polarization-maintaining fiber and components, thereby leading to enhanced mean wavelength stability of the SFS. Using polarization-maintaining components does not produce fully unpolarized output, but this is unimportant to the source stability because the dependence on pump polarization is removed by eliminating polarization drifts altogether.

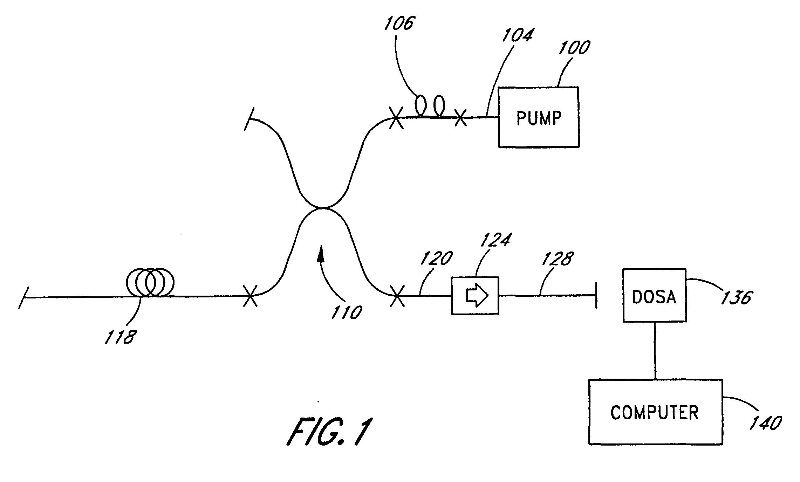

Experimental data related to a first embodiment of the invention are collected using the setup shown in FIGURE 1. An optical pump source 100 such as a laser diode has an output pigtail 104 spliced to a polarization controller 106 that is spliced to an optical coupling element 110 such as a wavelength division multiplexing (WDM) fiber coupler. The optical pump source 100 may alternatively comprise one or more light emitting diodes (LEDs). The WDM coupler 110 is in turn spliced to a doped optical fiber 118 capable of producing optical output in the form of superfluorescent light. The optical fiber 118 is preferably an Er-doped fiber of silicon dioxide. (In the embodiments disclosed herein, other rare earths such as neodymium may also be used.) For the results reported here, the fiber is 15 meters in length and its small-signal absorption is 12 dB/m at 1480 nm and 27 dB/m at 1530 nm. The WDM coupler 110 is further spliced to an input pigtail 120 of an isolator 124, which has an output pigtail 128 that directs the optical output from the fiber 118 to a combination depolarizer/optical spectrum analyzer (DOSA) 136. The isolator 124 prevents unwanted optical feedback from the DOSA 136 from affecting the spectrum of the superfluorescence emitted by the doped fiber 118.

For the purpose of this measurement, it is important that the optical spectrum analyzer (OSA) exhibit no polarization dependence, i.e., that if different polarizations of the same spectrum of light are fed into the OSA, the spectra read and supplied by the OSA are the same. However, the OSA used for this measurement exhibited some polarization dependence, i.e., it acted as a polarization-independent OSA preceded by a frequency-dependent partial polarizer. To eliminate this undesirable property, a fiber depolarizer was placed in front of the OSA. The fiber depolarizer, as described below, was made of two lengths of high-birefringence fiber spliced together at a 45° angle. The first fiber length was 1.5 meters, and the second fiber length was 3 meters. When the polarization of spectrally broad light fed into the DOSA 136 is changed, the spectrum read by the DOSA remains unchanged, so that the DOSA acts as a polarization-independent instrument.

As indicated in FIGURE 1, the superfluorescent output signal emerging from the Er-doped fiber 118 passes through the isolator 124 before being detected by the DOSA 136. Digitized output from the DOSA 136 can be recorded and displayed by a computer 140 which calculates spectrum statistics, and in particular, calculates the mean wavelength of the spectrum. The data acquisition rate was selected such that this setup scans and displays a new spectrum, then calculates and displays its mean wavelength, once every few seconds. The setup of FIGURE 1 thus comprises a backward SFS pumping arrangement in which the mean wavelength of the spectral output can be monitored over time.

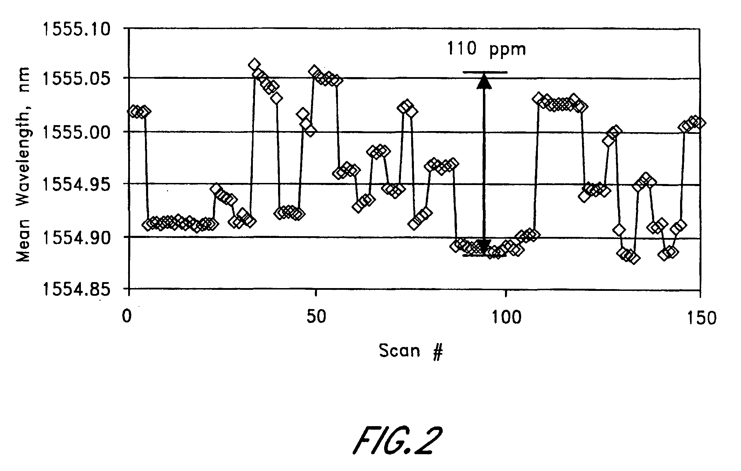

FIGURE 2 shows data collected with the setup of FIGURE 1, in which the SFS mean wavelength is plotted against scan number. Before taking each data point in the plot, the polarization controller 106 was adjusted so that a different polarization of the pump radiation entered the doped fiber 118. The polarization controller 106 was thus adjusted repeatedly to provide substantially all possible pump polarization states (or all points on the Poincaire sphere). However, the polarization controller 106 was not necessarily varied in a regular, systematic way by, for example, changing the polarization by a fixed amount from scan to scan. Thus, the mean wavelengths are not expected to exhibit any trend with scan number.

The observed range in mean wavelength relative variations (i.e., Δλ/λ) in FIGURE 2 is approximately 110 ppm, which is much larger than the mean wavelength stability required for a high-grade fiber optic gyroscope, which is preferably < 1 ppm.

Thus, even if the state of polarization of the light entering the fiber 118 were to change by only a relatively small fraction, the SFS mean wavelength would still vary by an amount substantially greater than 1 ppm. Such changes can easily occur over long time periods (an hour or more), e.g., changes in the environment can alter the birefringence of any portion of the optical link between the pump source 100 and the far end of the erbium-doped fiber 118, such as the output pigtail 104, the WDM coupler 110, and the erbium-doped fiber 118. Accordingly, environmental factors can produce a slow drift in the SFS mean wavelength, making the apparatus of FIGURE 1 unsuitable for use in systems requiring a highly stable mean wavelength.

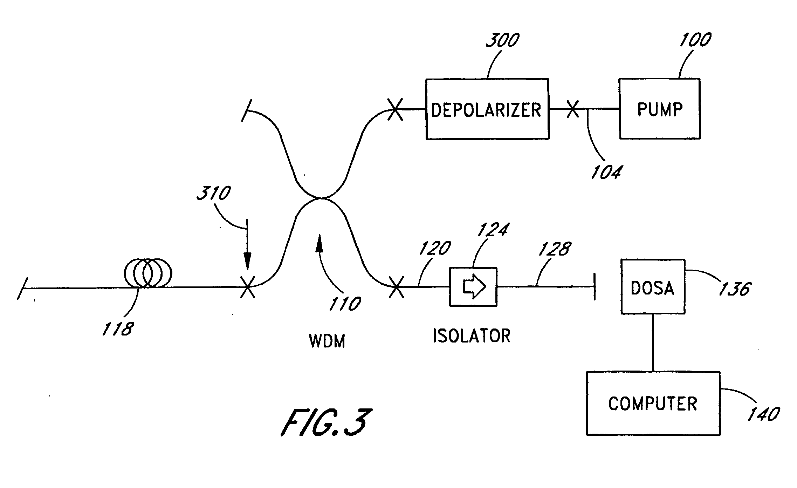

In accordance with a first embodiment of the present invention, the polarization controller 106 shown in FIGURE 1 is replaced by a depolarizer 300, as illustrated in FIGURE 3. As is well known in the art, a depolarizer is a device that randomizes the state of polarization of a light source by, for example, scrambling its polarization rapidly over time. Alternatively, a depolarizer may give different states of polarization to different frequency components of an optical source, so that the light is no longer characterized by a single state of polarization, but rather, the polarization is a strong function of wavelength.

The WDM coupler 110 of the embodiment shown in FIGURE 3 advantageously has a coupling ratio and a loss that are independent of polarization, so that depolarized pump light from the depolarizer 300 is still depolarized where it enters the erbium-doped fiber 118. As a result, polarization-dependent gain within the fiber 118 is greatly reduced, and the output of the superfluorescent optical fiber 118 (at the point indicated by the arrow 310) is unpolarized. In other words, if an additional polarizer (not shown) were inserted between the isolator 124 and the OSA 136, the output spectrum at the OSA would be substantially identical for all rotational orientations of this additional polarizer, assuming that the transmission of the isolator 124 from left to right is independent of polarization.

The depolarizer 300 may comprise a number of depolarizers known in the art, including, but not limited to, a polarization scrambler (e.g., a fast PZT modulator) and a Lyot depolarizer. Other kinds of depolarizers are discussed in the literature. (See, for example, A. D. Kersey, and A. Dandridge, "Monomode fibre polarization scrambler," *Electron. Lett.* Vol. 23, 634-636, June 1987; and K. Takada, K. Okamota, and J. Noda, "New fiber-optic depolarizer," *J. Lightwave Technol.* Vol. 4, 213-219, February 1986, which discusses a Mach-Zehnder interferometer with a delay line). In its simplest form, a PZT-based depolarizer may comprise a PZT ring about which is wound an optical fiber. A voltage applied to the ceramic ring is rapidly modulated, causing the size of the ring to vary, so that when the polarization of light is properly aligned with the PZT ring, the polarization of the light propagating through the optical fiber varies with time. A PZT depolarizer suitable for depolarizing an arbitrary input polarization may advantageously comprise two PZT rings that are orthogonal to each other.

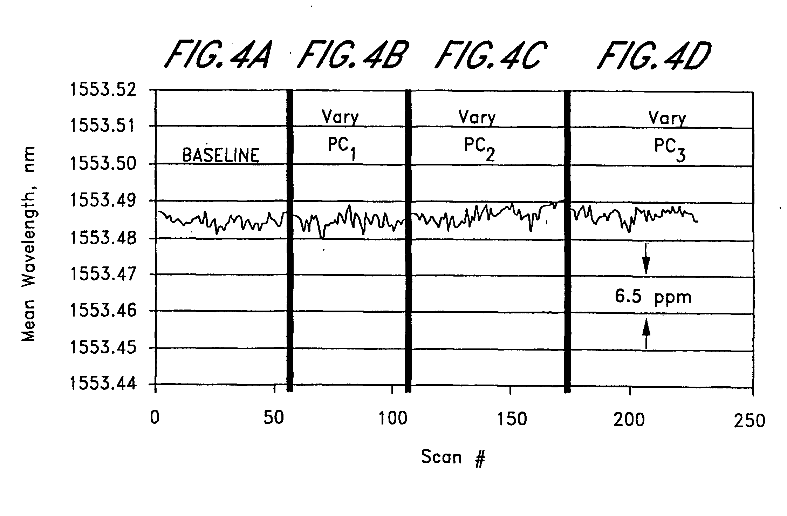

A Lyot depolarizer was used for the depolarizer 300 of FIGURE 3 to collect the experimental results presented below (FIGURE 4). A Lyot fiber depolarizer generally comprises two lengths of highly birefringent fiber spliced together (for the experimental results reported herein, the Lyot depolarizer comprised 1 meter and 1.5 meter lengths), with their birefringence axes oriented 45° with respect to each other. (See, for example, K. Bohm, K. Petermann, and E. Weidel, "Performance of Lyot depolarizers with birefringent single-mode fibers," *J. Lightwave Technol.* Vol. 1, 71-74, March 1983.) A Lyot fiber depolarizer transforms polarized light into light with a state of polarization that depends strongly on wavelength. For example, a 30 nanometer (nm) broad spectrum characterized by a single polarization may be converted by a Lyot polarizer into, say, ten adjacent spectral intervals of 3 nm width each, with adjacent intervals having orthogonal polarizations.

Thus, if the spectrum of the light is broad enough, and if the lengths of the fibers in the Lyot depolarizer are long enough, the light output by the depolarizer will carry the same power in any two orthogonal linear polarizations, and the mean wavelength of these two polarizations will be identical.

For the results presented in FIGURE 4 below, the pump source 100 was highly polarized, having an extinction ratio (the power of the more intense polarization divided by the power of the less intense polarization, in which the two polarizations are orthogonal) greater than 30 dB. After passing through the depolarizer 300, the pump light had an extinction ratio of around 3 dB or better, as described below. Experiments show that even a depolarizer that reduces the extinction ratio of the pump source to around 3 dB is sufficient to significantly improve the mean wavelength stability of the optical output of the fiber 118.

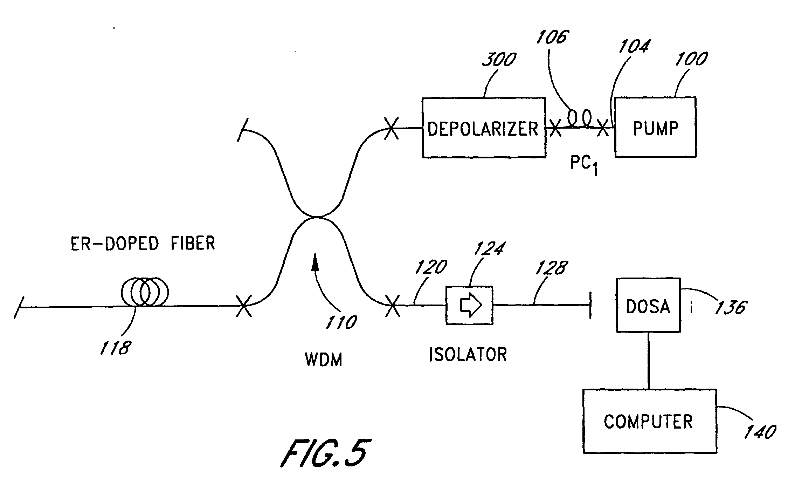

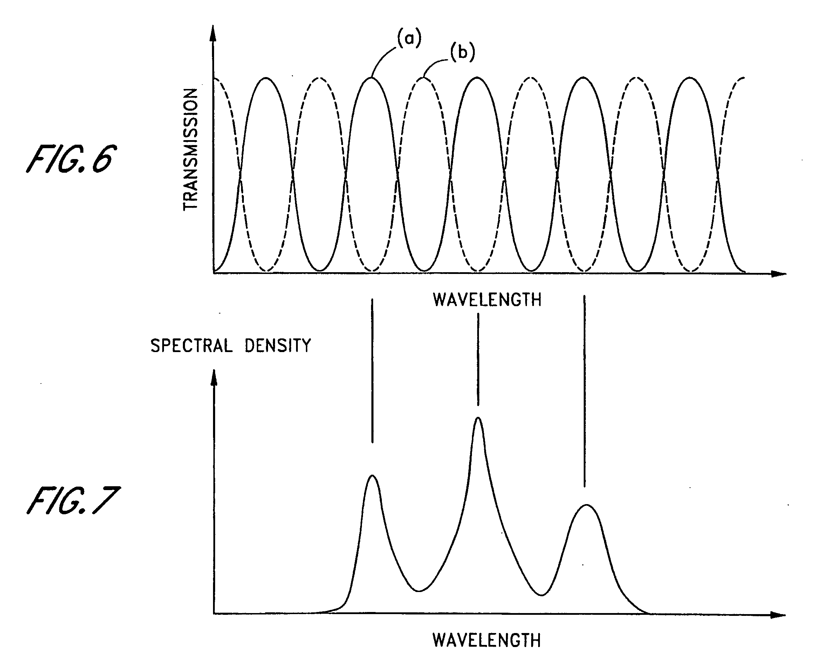

The foregoing is illustrated in FIGURES 4A and 4B. FIGURE 4A, labeled "Baseline," represents a series of mean wavelength measurements using the embodiment of FIGURE 5, which is similar to the embodiment of FIGURE 3, except that a first polarization controller 106 (designated here as PC₁) has been added between the pump source 100 and the depolarizer 300. After passing through the depolarizer 300, the pump light had an extinction ratio that depends on the state of polarization of the light at the input of the depolarizer. For some input polarizations, i.e., for some orientations of the polarization controller PC₁, the light at the output of the depolarizer 300 is strongly depolarized. However, for other orientations of polarization controller PC₁, after passing through the depolarizer 300, the pump light had an extinction ratio of only about 3 dB. No parameters are varied during these tests, and the fluctuation in the measured mean wavelength represents the system noise. The data of FIGURE 4B are also collected with the apparatus of FIGURE 5, using the same methodology used to generate the results of FIGURE 2. In particular, the orientation of the polarization controller is varied between scans to determine the extent of the variation of mean wavelength with changes in the pump polarization incident on the depolarizer 300. In FIGURE 4B, the variation in the SFS mean wavelength is only about 3 ppm, which is a considerable improvement over the 110 ppm variations (see, for example, FIGURE 2) observed using the same optical pump source 100 in the absence of a depolarizer 300. Further, this 3 ppm level appears to be no greater than the noise inherent in the experimental apparatus (see, for example, FIGURE 4A), suggesting that the SFS stability could in fact be significantly better than 3 ppm. Thus, one conclusion to be drawn from FIGURES 4A and 4B is that the depolarizer 300 makes the optical output from the fiber 118 largely insensitive to perturbations in the pump polarization and to changes in the birefringence of the fiber pigtail 104. In preferred embodiments of the invention described herein, optical output is generated in which the mean wavelength is stable to within 100 ppm, and more preferably to within 50 ppm, and still more preferably to within 3 ppm.

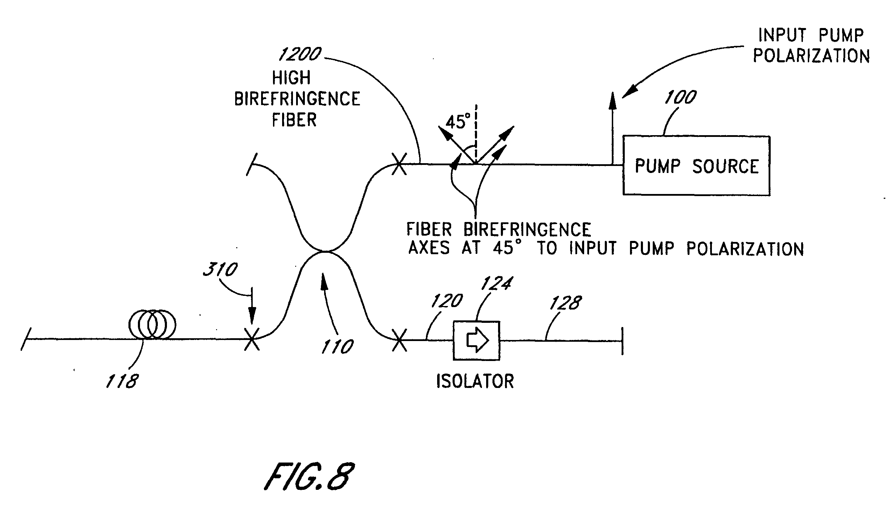

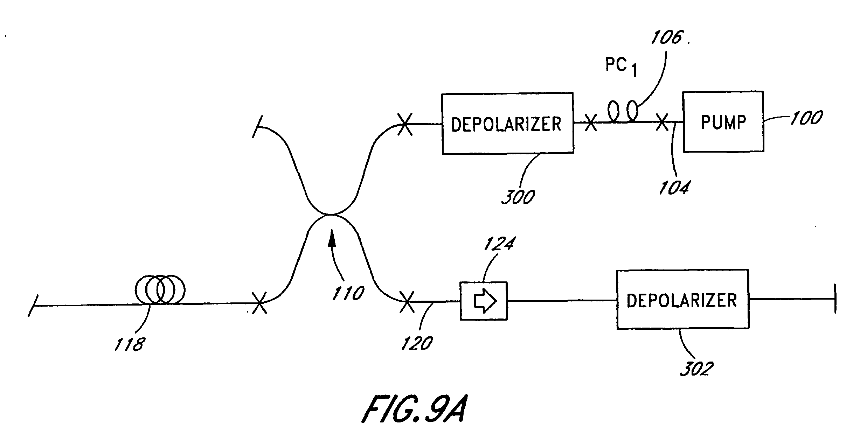

The reason why the pump light is still about 3-dB polarized after passing through the Lyot depolarizer is now considered. For any given linear polarization input into a Lyot depolarizer, and for any given linear polarization at the output of the depolarizer, the transmission spectrum f₁ of the depolarizer comprises a nearly periodic series of maxima and minima, as illustrated by curve (a) in FIGURE 6. As illustrated by curve (b) in FIGURE 6, the transmission spectrum f₂ of the depolarizer for the orthogonal output polarization also comprises an approximately periodic series of maxima and minima, which are out of sequence with those of the transmission spectrum f₁. The spacing between maxima (or between minima) of both spectra decreases as the lengths of birefringent fiber used in the depolarizer are increased. If the (linear) polarization of the input light is rotated, the transmission spectra f₁ and f₂ will simply shift with wavelength, but their respective shapes will remain unchanged. As illustrated in FIGURE 7, the broadband light emitted by a semiconductor source, such as those commonly used as pump sources for SFS sources, often exhibits a series of modes. If pump light having the spectrum of FIGURE 7 is launched into a Lyot depolarizer and that light has a polarization that matches that of curve (a) of FIGURE 6, then the light will not be well depolarized by the depolarizer, because most of the light's frequency components will be transmitted by the depolarizer without altering its polarization. This is why partially polarized light is observed for certain positions of the polarization controller PC₁ at the output of the depolarizer 300. For certain input polarizations the pump light accidentally matched the transmission spectrum of the depolarizer reasonably well, and light was poorly depolarized. For other positions of the polarization controller PC₁, however, the light output by the depolarizer 300 was much more strongly depolarized.

A possible remedy to this problem is to select an input polarization for the light that yields strongly depolarized output light. However, if the light is fed into the Lyot depolarizer through a standard, low-birefringence fiber, the state of polarization of the light entering the depolarizer will vary with environmentally induced changes in the birefringence of the low-birefringence fiber. A preferred solution is to select the lengths of the two fibers forming the depolarizer such that for the given spectrum of the pump source, and for all possible input polarizations, the transmission spectrum of the depolarizer is very different from the light spectrum.

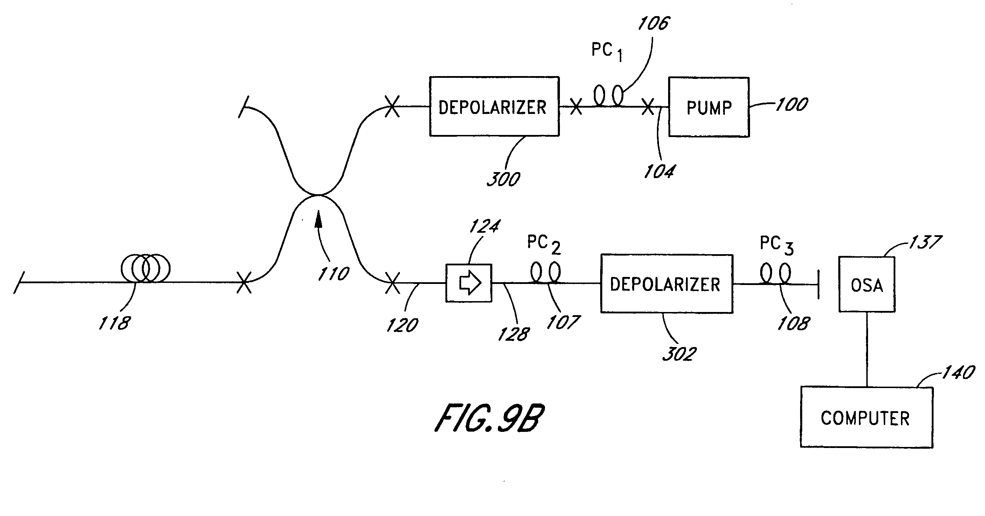

Another way of solving the aforementioned difficulty uses a depolarizer and couples linearly polarized pump light directly into the depolarizer, with the polarization of the light aligned at 45° to the axes of the depolarizer's high-birefringence fiber, as shown in FIGURE 8. The first benefit of this configuration is that since the polarization of the light incident on the depolarizer is fixed, a second length of high-birefringence fiber at 45° to the first length is not needed. Such a depolarizer 1200 (FIGURE 8) is advantageously made of a single length of high-birefringence fiber, which eliminates the need for a difficult and slightly lossy 45° splice between high-birefringence fiber, thereby reducing the cost of the depolarizer. The depolarizer 1200 may be advantageously butt-coupled to the pump 100. The second benefit is that the state of polarization of the light entering the depolarizer 1200 is stable against external perturbations. Consequently, the degree to which the pump light is depolarized is invariant in time, and the stability of the mean wavelength of the SFS pumped by this depolarized pump light is increased.

In general, the optical properties of the WDM coupler 110 and the optical isolator 124 exhibit some dependence on polarization, which will affect the spectrum, and possibly the mean wavelength, of the broadband light returning from the doped fiber 118. As a first case of interest, a "type I" polarization dependence is considered, namely a WDM coupler with a coupling ratio that has a wavelength-dependent polarization dependence. In this case, the coupling ratio is different for the two orthogonal states of polarization, and the ratio R of the coupling ratios at two orthogonal polarizations is not the same at all frequencies across the bandwidth of the ASE light. For example, at 1553 nm the coupler couples 98% for a given linear polarization and 100% for the orthogonal polarization (a ratio R=0.98), while at 1555 nm, the coupler couples 95% for the same first polarization and 99% for the same orthogonal polarization (a ratio R=0.95/0.99≈0.96). If fully unpolarized ASE light from the doped fiber 118 is launched into such a coupler, the light transmitted by the coupler (i.e., at a point between the coupler 110 and the isolator 124) will have a spectral shape that is different for the two polarizations, because the coupler has applied a differential filter function to the two polarizations. Therefore, the spectrum of the light transmitted by the coupler will have a different mean wavelength for the two polarizations. When such light is used as input into a gyroscope coil, for example, and if the birefringence of any portion of the fiber between the coupler and the gyroscope coil varies (e.g., due to external perturbations), the spectrum launched into the gyroscope coil, and thus the mean wavelength of this spectrum, will vary, which is undesirable.

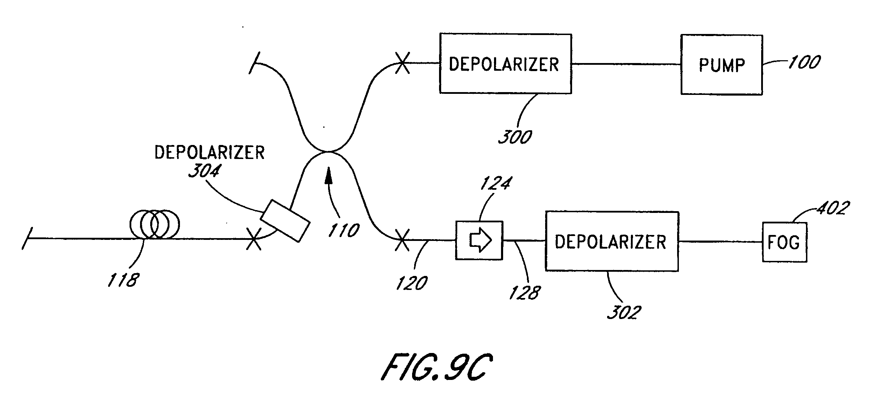

For example, the WDM coupler 110 used to generate the data presented here (manufactured by Gould Fiber Optics of Millersville, MD) exhibits type I behavior. When substantially unpolarized broadband light in the 1.55 pm region is launched into it, the difference in the mean wavelength of orthogonal polarizations of the light transmitted by the coupler was measured to be 175 ppm. In order to reduce the effects of a coupler with a type I polarization dependence, a second depolarizer 302, such as a Lyot depolarizer, is advantageously added downstream from the WDM coupler, as illustrated in the embodiment of FIGURE 9A.

The same general concern arises regarding the isolator 124. If the transmission of the isolator 124 depends on polarization, and this polarization dependence is a function of frequency, then the isolator 124 will modify the spectral content of two orthogonally polarized light signals differently, which is undesirable for the reasons mentioned above. Tests indicated that the polarization dependence of the transmission of the isolator 124 was less pronounced than the polarization dependence of the coupling ratio of the coupler. The polarization dependence of the isolator 124 is reduced by placing the second depolarizer 302 downstream from the isolator 124, as illustrated in FIGURE 9A.

Next, a WDM coupler with a "type II" polarization dependence is considered, namely a WDM coupler having a coupling ratio whose wavelength-dependence is independent of polarization. In other words, the coupling ratio is different for the two orthogonal states of polarization, but the ratio R of the coupling ratios for orthogonal polarizations is the same at all frequencies across the bandwidth of the ASE light. If fully unpolarized ASE light from the doped fiber 118 is launched into such a coupler, the light transmitted by the coupler (i.e., at a point between the coupler 110 and the isolator 124) will have a spectrum that is identical for each of the two aforementioned orthogonal polarizations, except that one polarization will carry more power than the other. When such light is used as input into a gyroscope coil, and the birefringence of any portion of the fiber between the coupler 110 and the gyro coil varies, the power launched into the gyroscope coil will vary, though not by a large amount if R is not too far from unity, but the mean wavelength of the light launched into the gyro will be polarization independent. Consequently, a second depolarizer 302 is not required to correct this type of polarization dependence. Similarly, if the transmission of the isolator 124 also exhibits a type II polarization dependence, the isolator 124 will not affect the mean wavelength of the light passing through it, and a second depolarizer 302 in FIGURE 9A is not required. In one preferred embodiment, the SFS uses a WDM and an isolator with type II polarization dependence.

In short, if both the isolator 124 and the coupler 110, as well as any other component added between the erbium-doped fiber 118 and the input polarizer to a gyroscope, exhibit a weak type II polarization dependence, a second depolarizer 302 is not required. However, if one or more of these components exhibits a strong type II polarization, i.e., if one polarization is much more strongly attenuated than its orthogonal polarization, a second depolarizer 302 is required. On the other hand, if either the isolator 124, the coupler 110, or any other component added between the erbium-doped fiber 118 and the gyro input polarizer exhibit a type I polarization dependence, a second depolarizer 302 is required.

To measure the effectiveness of the second depolarizer 302 in reducing the polarization dependence of the WDM coupler 110 and the isolator 124, a testbed of the superfluorescent source of FIGURE 9A was constructed using a depolarizer 302 with two high birefringence fiber lengths of 1.5 meters and 3 meters, respectively. This testbed is shown in FIGURE 9B. The optical output of the source was launched into an OSA 137, and the spectrum read by the OSA was captured and analyzed by a computer 140. The OSA 137 was a polarization-dependent optical spectrum analyzer, i.e., the optical spectrum that it produced depends on the polarization of the light launched into it. Two additional polarization controllers 107 and 108 (designated PC₂ and PC₃) are introduced, one on each side of the depolarizer 302 (see FIGURE 9B). Because the OSA 137 produces a spectrum that depends on the polarization of the input light, if the depolarizer 302 were not effectively depolarizing the light from the SFS 118, the OSA would read a spectrum mean wavelength that depends on the orientation of either polarization controller 107 or 108. However, when the respective orientations of the polarization controller 107 and 108 are varied (see FIGURES 4C and 4D), the mean wavelength of the SFS spectrum measured by the OSA 137 is found to be within the system noise limit of 3 ppm. Consequently, the depolarizer 302 effectively reduces the polarization dependence of the SFS spectrum introduced by the WDM coupler 110 and the isolator 124.

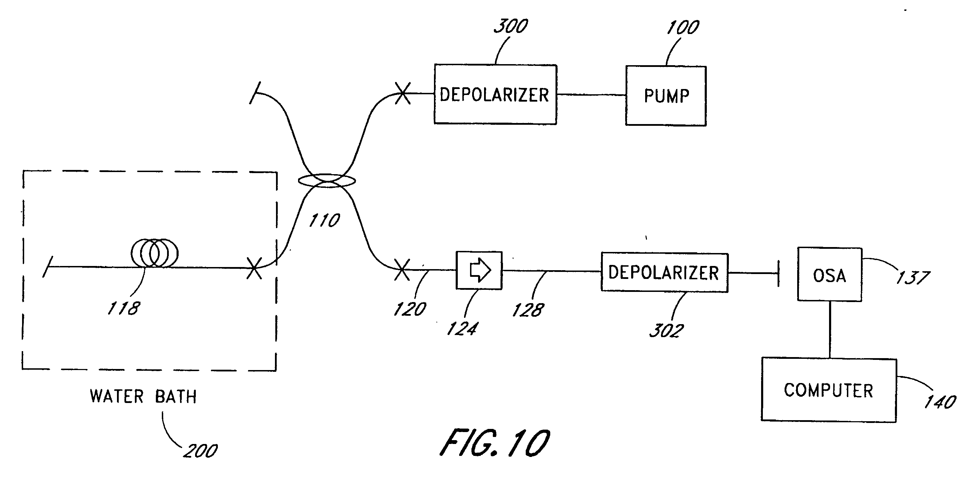

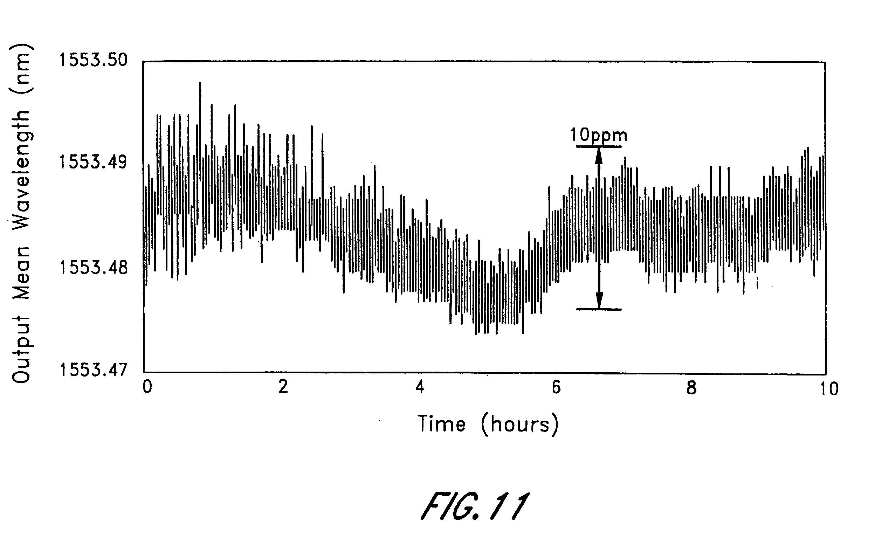

To further assess the effectiveness of the two depolarizers 300 and 302 in reducing variations in the mean wavelength of an SFS due to environmental perturbations, the erbium-doped fiber 118 was placed in a water bath 200 at room temperature, as shown in FIGURE 10, and recorded the mean wavelength of the source as a function of time for a period of 10 hours. During this period, none of the components in FIGURE 10 was adjusted. The temperature of the bath 200 was unregulated, but it varied by at most ±1°C, and probably by only ±0.5°C, during the course of this test. The OSA 137 of FIGURE 10 is the polarization-dependent instrument described earlier. The result of this test is shown in FIGURE 11 in the form of the mean wavelength of the source plotted versus time. FIGURE 11 shows that the mean wavelength of the source exhibits some short-term variations, of the order of 4 ppm peak to peak, as well as long-term variations, of the order of 6 ppm peak to peak. The same fiber source without the two depolarizers 300 and 302 exhibited considerably larger peak-to-peak variations in mean wavelength, measured to be 50 ppm in one 80 minute test. The conclusion is that the use of the two depolarizers 300 and 302 substantially improves the overall stability of the source mean wavelength.

In the embodiment of FIGURE 9C, optical output is directed into an internal polarizing element (i.e., a polarizer, not shown) of a fiber optic gyroscope 402, in which the optical output passes through the polarizer before entering the rotation sensing coil (not shown) of the gyroscope. (All of the superfluorescent sources disclosed herein may advantageously be used as optical input to a fiber optic gyroscope.) Three depolarizers 300, 302, 304 are shown, and one, two, or all three of these depolarizers may be used. The depolarizer 300 alone may be sufficient if the coupling ratio of the WDM coupler 110, the transmission of the WDM coupler 110, and the transmission of the isolator 124 are polarization independent. The depolarizer 304 depolarizes the pump light in one direction and ASE traveling in the other direction. The depolarizer 302 depolarizes the output signal to remove polarization effects introduced by the WDM coupler 110 and the isolator 124. However, the depolarizer 302 does not correct for polarization-dependent gain, so that if there is polarization-dependent gain in fiber 118, either the depolarizer 300, the depolarizer 304, or both depolarizers, must be used in addition to depolarizer 302 to correct for this problem. All depolarizers introduce a small but finite loss. In the limit that the depolarizers 300, 302, and 304 become lossless and inexpensive, it becomes advantageous to use all three of them.

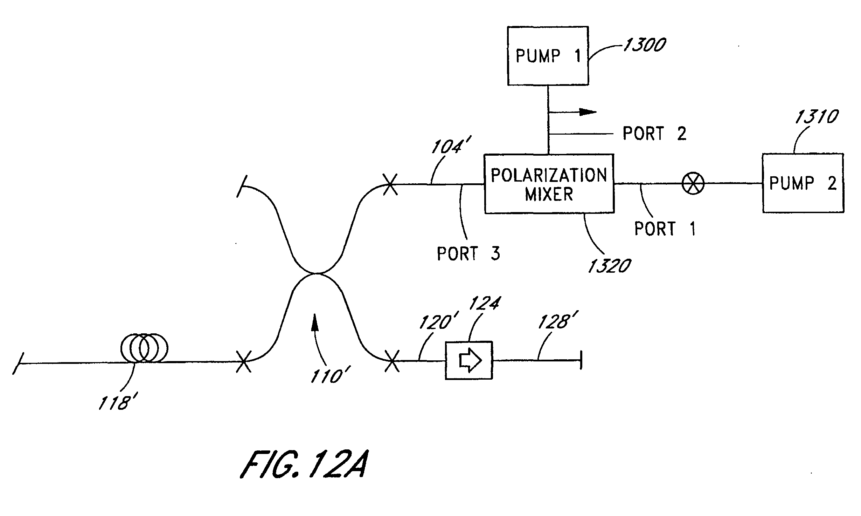

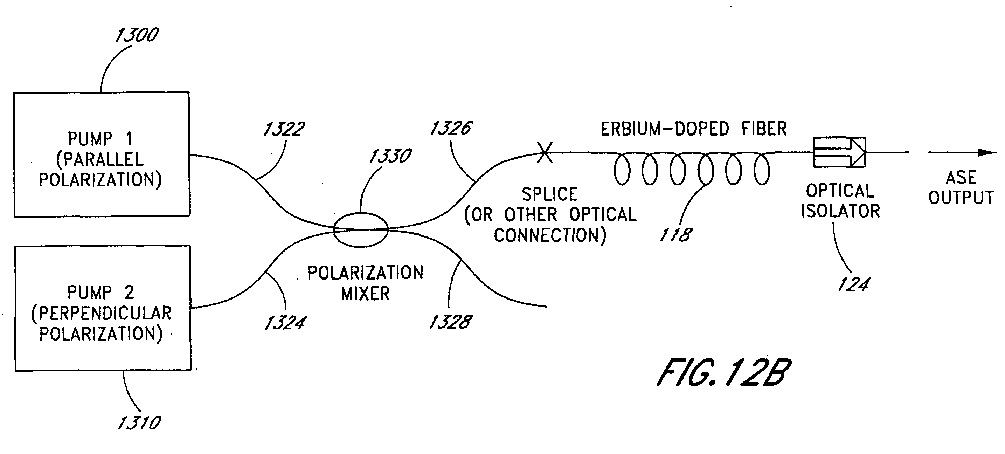

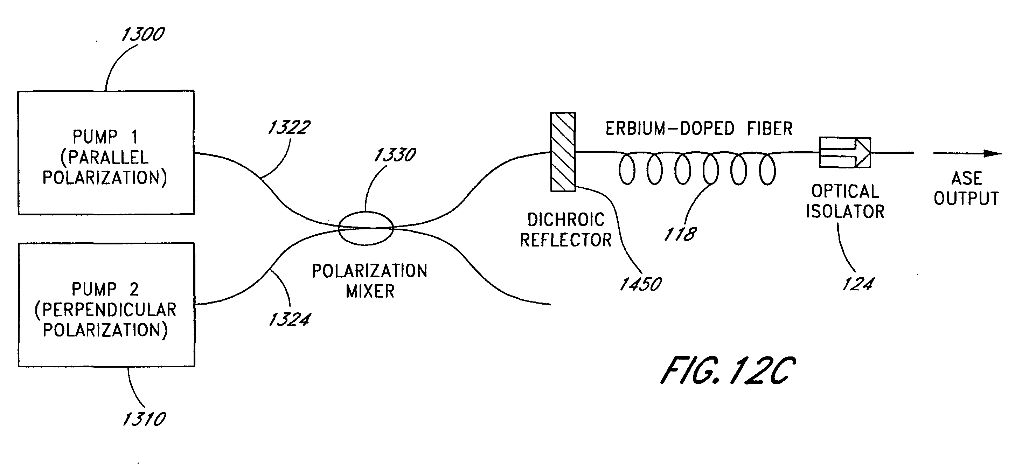

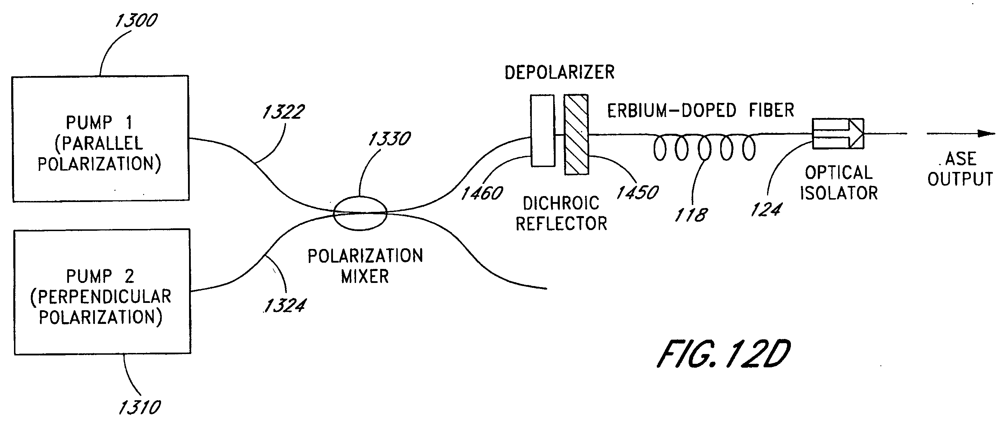

Another method of reducing the pump polarization dependence of the source mean wavelength is to pump the superfluorescent source with two (or more) linearly polarized pump sources with substantially the same spectrum. As illustrated in FIGURE 12A, a first pump source 1300 and a second pump source 1310 can be multiplexed through a polarization mixer 1320, a device that couples a first pump having a first polarization from port 1 to port 3, and a second pump having a second polarization from port 2 to the same port 3, with the two pump polarizations being perpendicular in port 3. The polarization mixers herein can be, for example, either a polarizing cube or a polarization-dependent coupler, such as an all fiber polarization dependent coupler or a fiber pigtailed bulk optic polarization coupler. In FIGURE 12A, the primed components function like their analogous components of FIGURE 3, except that the primed components (the output pigtail 104', the optical coupler 110', the doped fiber 118', and the isolator pigtails 120' and 128') are all polarization maintaining. (Alternatively, the output pigtail 104', the optical coupler 110', the doped fiber 118', and the isolator pigtails 120' and 128' of FIGURE 12A may be non-PM components.) Embodiments in addition to the embodiment shown in FIGURE 12A are now described which likewise rely on pumping an erbium-doped fiber (EDF) with two orthogonally polarized pump sources. These embodiments are illustrated in FIGURES 12B, 12C, and 12D, corresponding respectively to a forward-pumped configuration, a double-pass configuration, and a double-pass configuration with an additional Lyot depolarizer.

A forward superfluorescent source is illustrated in FIGURE 12B, in which two linearly polarized pump sources 1300, 1310 are optically combined with a polarization mixer 1330. The polarization mixer 1330 in FIGURE 12B is shown as a polarization fiber coupler having input fibers 1322, 1324 and output fibers 1326, 1328, although a cube beam splitter may be used as the polarization mixer, for example. The two pump sources 1300, 1310 are coupled to the input fibers 1322, 1324, respectively, and deliver the same power. The input fibers 1322, 1324 are advantageously PM fiber. The two pump sources 1300, 1310 are launched along a different birefringence axis of the PM fibers 1322, 1324. The polarization fiber coupler 1330 transmits one polarization (for example, the polarization in the plane of FIGURE 12B), but essentially fully couples the orthogonal polarization (e.g., the polarization perpendicular to the plane of FIGURE 12B). Consequently, the output fiber 1326, which is coupled to an erbium doped fiber 118, carries pump light having two orthogonal polarization components of equal power. The output fiber 1326 and the erbium-doped fiber 118 to which it is optically connected are not necessarily PM fiber. (The output port corresponding to fiber 1328 may or may not be used.) An optical isolator 124 reduces unwanted optical feedback. As the two pump signals from pump sources 1300, 1310 travel through the input fibers 1322, 1324, the states of polarization of the signals remain orthogonal to each other at all points along the input fibers. Thus, the erbium-doped fiber 118 is pumped with two orthogonal pump signals, and the gain of the erbium-doped fiber 118 is free of polarization dependence. For the gain of the erbium-doped fiber 118 to be completely free of polarization dependence, the two pump polarizations in the output fiber 1326 should carry identical power. Ideally, the polarization mixer 1330 completely transmits the pump signal of the pump source 1300 into the fiber 1326 (i.e., this transmission T₁ is unity), and the polarization mixer 1330 completely couples the pump signal of the pump source 1310 into the fiber 1326 (i.e., this transmission T₂ is unity). However, some polarization mixers exhibit a T₁ that differs (sometimes only slightly) from T₂, for example, due to polarization-dependent loss or a design that is less than optimum. In this case, if the pump powers launched into the fibers 1322 and 1324 are equal, the two pump powers in the output fiber 1326 will be slightly different. To correct for this imbalance, one or both of the pump powers launched into fibers 1322 and 1324 must be adjusted accordingly.

Two orthogonally oriented pump sources 1300, 1310 are used in the double pass SFS configuration illustrated in FIGURE 12C. A dichroic reflector 1450 is placed at the pump input end of the EDF 118 so that this SFS operates in a double-pass configuration. The dichroic reflector 1450 is designed to have (1) a high reflection coefficient (ideally 100%) over a good fraction (ideally all) of the source's ASE spectral range, and (2) a high transmission coefficient (ideally 100%) at the pump wavelength. Once again, the polarization mixer 1330 is illustrated as being a polarization fiber coupler, although a cube beam splitter can be used. The embodiment of FIGURE 12C offers the advantages of a lower threshold, a lower pump power requirement, and a shorter required length of the erbium-doped fiber. The dichroic reflector 1450 may be a bulk-optic device, a fiber Bragg grating reflector, or it may comprise multiple dielectric layers deposited directly onto the pump input end of the EDF 118. The pump output end of the EDF 118 in FIGURES 12A, 12B, 12C, and 12D (discussed below) is optically terminated, for example, by polishing or cleaving the end of the fiber 118 at an angle, or splicing it to a coreless fiber. The fiber end may be followed (in the optical path sense) by an optical isolator 124. As an alternative to the double-pass superfluorescent source illustrated in FIGURE 12C, a dichroic reflector 1450 may be placed in the embodiment of FIGURE 12A between the WDM coupler 110' and the input pigtail 120' of the isolator 124, but this would necessitate making the left end of the EDF 118' the output port and placing an optical isolator at that end.

The effectiveness of the embodiments shown in FIGURES 12A, 12B, and 12C may be improved by placing a depolarizer in the path of the multiplexed pump signals. For example, in the case of FIGURE 12A, a depolarizer 1460 (see FIGURE 12D) may be placed between the output pigtail 104' of the polarization mixer 1320 and the WDM coupler 110'. In FIGURE 12B, a depolarizer 1460 (see FIGURE 12D) may be placed between the polarization mixer 1330 and the EDF 118. In the embodiment of FIGURE 12C, a depolarizer 1460 (see FIGURE 12D) may be placed between the polarization mixer 1330 and the dichroic reflector 1450, as illustrated in FIGURE 12D. The depolarizer 1460 in FIGURE 12D (which can, for example, be a Lyot depolarizer either in a bulk-optic form or a fiber form) depolarizes each of the two orthogonal pump signals traveling through it. The role of the depolarizer 1460 is to distribute the power in each pump signal evenly onto two orthogonal polarization axes, which may be important if the two pump sources 1300, 1310 do not generate the same pump power. If a depolarizer is not used (e.g., FIGURES 12A, 12B, and 12C) and the pump sources 1300 and 1310 generate different power levels, there will be some polarization-dependent gain. In the embodiment shown in FIGURE 12D, however, the depolarizer 1460 acts to reduce this residual polarization dependent gain, and thus to reduce the dependence of the mean wavelength of the SFS on the input polarization of the pump sources and any difference in power between the two pump sources.

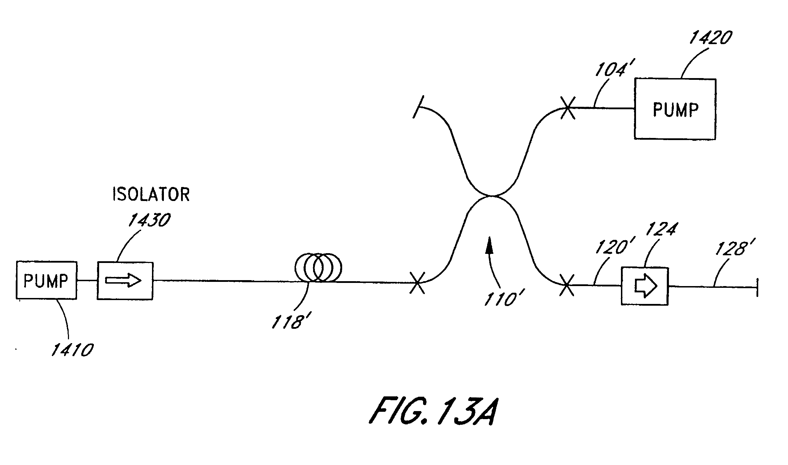

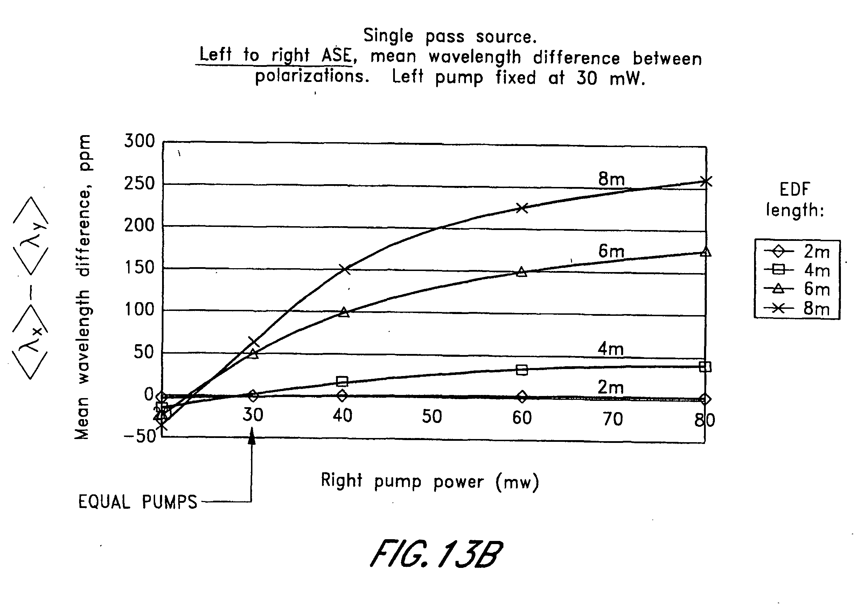

Alternatively, as illustrated in FIGURE 13A, the superfluorescent source can be bidirectionally pumped, i.e., pumped from one end with a pump source 1410 having a first polarization, and pumped from the other end with a pump source 1420 having a second polarization orthogonal to the first. Output from the pump source 1410 may be advantageously passed through an isolator 1430. Likewise, output from the pump source 1420 may be passed through an isolator (not shown) positioned between the pump source 1420 and the WDM coupler 110'. With both pump sources 1410 and 1420, care must be taken to use free space or high-birefringent waveguides to bring the pump light from the pump source to the superfluorescent fiber 118', so that the pump light enters the superfluorescent source with the proper polarization. In this method, it is important that for every frequency component, the polarizations of the two pump signals remain essentially orthogonal along the length of the superfluorescent source.

One solution for satisfying this requirement is to make the superfluorescent source from a short optical waveguide, such as a standard single-mode fiber, a planar-geometry or integrated optic waveguide, with a high dopant concentration. A second solution for satisfying the orthogonality requirement discussed above is to make the EDF from a high-birefringence single-mode fiber, or to use a high-birefringence planar-geometry or a high-birefringence integrated optic waveguide. In this case, one of the pumps is launched along the slow axis of the guide, and the other pump along the fast axis of the guide, either in the same or opposite directions. The high birefringence guarantees that the two pumps remain orthogonal along the entire length of the waveguide. In both cases, the spectra of the two pump sources do not need to be identical. The spectra can in fact be different, provided that they are such that substantially the same optical gain spectrum is created for light propagating along either one or the other of the birefringence axes of the waveguide.

Even when the fiber 118' of FIGURE 13A is pumped simultaneously in opposite directions with the same power, simulations show that the forward and backward ASE outputs from the fiber 118' are still slightly polarized, such that their mean wavelength difference Δ is not zero. If, for example, pump light from the first pump 1410 (which is linearly polarized) is launched along the x axis of fiber 118', and pump light of equal power from the second pump 1420 (which is also linearly polarized) is launched along the y axis, the ASE exiting to the left in FIGURE 13A (ASE₁) is slightly polarized along the x axis, while the ASE exiting to the right in FIGURE 13A (ASE₂) is slightly polarized along the y axis. The physical explanation for this phenomenon is that ASE₁ is the sum of backward ASE generated by the first pump source 1410 and forward ASE generated by the second pump source 1420.

Since backward ASE is always more intense than forward ASE (unless the fiber is very short, in which case they are identical), the largest contribution to ASE₁ is backward ASE generated by the first pump source 1410, with ASE₁ being slightly polarized along x. Conversely, ASE₂ is mostly generated by the y-polarized second pump source 1420, with the result that ASE₂ is slightly polarized along the y-axis. Consequently, both ASE₁ and ASE₂ have non-zero Δ. As these arguments demonstrate, in order to generate an ASE emission with Δ=0, it is not in general sufficient to pump bidirectionally, and it is advantageous to eliminate the residual asymmetry inherent in the embodiment of FIGURE 13A.

One way to eliminate this residual asymmetry is to introduce a small difference in the powers of the two pump sources 1410, 1420. That such a difference in the powers of the pump sources 1410, 1420 can eliminate this asymmetry can be understood from physical considerations as follows. In the event that one of the pump sources is turned off completely, e.g., the second pump source 1420, then ASE₁ is still slightly polarized along the x-axis, i.e., its mean wavelength along the x-axis, <λₓ>, differs from its mean wavelength along the y-axis, <λ_{y}>. Specifically, <λₓ> is slightly shorter than <λ_{y}>, and the mean wavelength difference Δ=<λₓ>-<λ_{y}> is negative. If, on the other hand, the second pump source 1420 is on while the first pump source 1410 is off, then ASE₁ is entirely generated by the second pump source, which is polarized along the y-axis, such that ASE₁ is slightly polarized along the y-axis. In this case, the mean wavelength of ASE, along the y-axis, <λ_{y}>, is slightly shorter than that along the x-axis <λₓ>, and the difference Δ=<λₓ>-<λ_{y}> is positive. In short, when the power P₁ of the first pump source 1410 is finite and the power P₂ of the second pump source 1420 is zero, Δ is negative, whereas when P₁ is zero and P₂ is finite, Δ is positive. It follows that there must be a specific combination of powers P₁ and P₂ for which Δ=0.

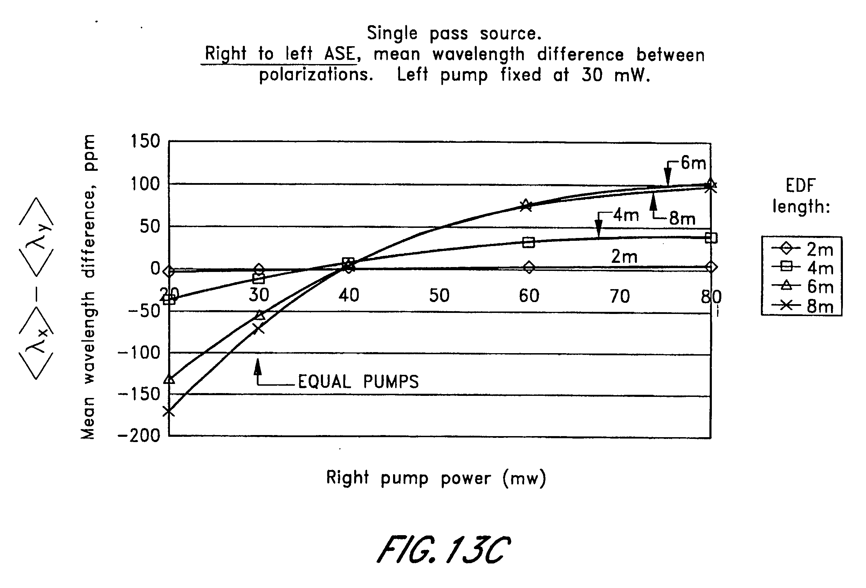

A method of selecting the appropriate power P₂ (for a given power P₁) that produces Δ=0 is illustrated in FIGURE 13B. FIGURES 13B and 13C were generated with the fiber amplifier computer code numerical simulator developed by Wagener that is mentioned above. In FIGURE 13B, the mean wavelength difference Δ for the output ASE, (on the left side of the EDF 118' in FIGURE 13A) is plotted as a function of the pump power P₂ launched into the EDF by the second pump source 1420, for constant pump power P₁ of 30 mW. The mean wavelength difference Δ is expressed in ppm, i.e., Δ is normalized to the average of the mean wavelengths of the two polarizations. The various curves were computed for different lengths of EDF, namely 2 m, 4 m, 6 m, and 8 m. As predicted from physical considerations above, as the power P₂ is increased from below P₁=30 mW to above 30 mW, the mean wavelength difference Δ goes from negative to positive for all lengths of the EDF 118'. Thus, for each of the fiber lengths modeled there is a finite pump power P₂ that causes Δ to be zero. In all cases, this power is lower than the power P₁ launched by the first pump source (30 mW). FIGURE 13B shows that by properly selecting the power launched by the second source 1420, the light emitted towards the first pump source 1410 can be made fully unpolarized.

In FIGURE 13C, the output ASE₂ entering the coupler 110' is calculated for a P₁ of 30 mW. Once again, the mean wavelength Δ goes from negative to positive, and for each fiber length modeled, there is a finite pump power P₂ that causes Δ to be zero, which is higher than the power P₁ launched by the first pump source (30 mW). Thus, FIGURE 13C shows that by properly selecting the power launched by the second source 1420, the light emitted towards the second pump source 1420 can be made fully unpolarized.

According to another embodiment of the invention, shifts in the mean wavelength of output from an SFS are substantially reduced by fixing the state of polarization of the optical pump source and using polarization-maintaining (PM) fibers throughout the fiber source. This differs from the prior art (see, for example, U.S. Patent 5,701,318 to Digonnet, et al.) because all the optical components discussed in the instant application are polarization maintaining, and not just the erbium-doped fiber.

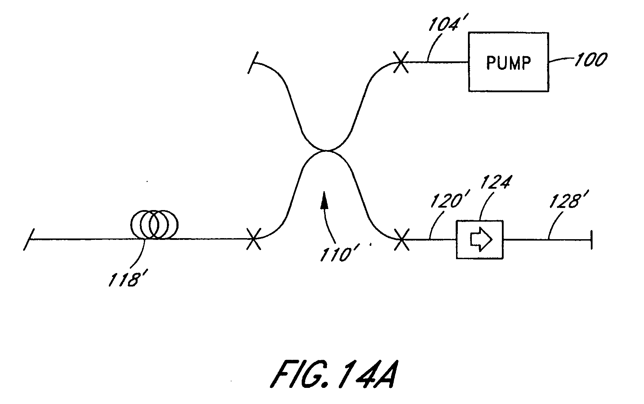

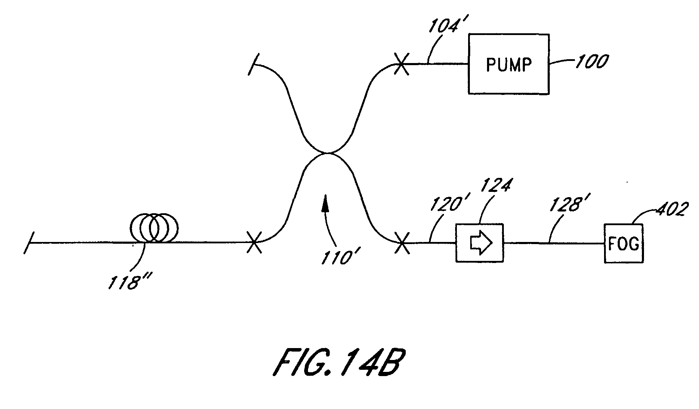

One example of such an embodiment is illustrated in FIGURE 14A, in which the primed components function much like their analogous unprimed components of FIGURE 3, except that the primed components (the output pigtail 104', the optical coupler 110', the doped fiber 118', and the isolator pigtails 120' and 128') are all polarization maintaining. In this embodiment, the output from the optical pump source 100 (which is preferably a laser diode) is launched along one of the fiber axes of pigtail 104'. Consequently, the pump and the superfluorescent signal remain aligned with those axes regardless of environmental conditions. However, this embodiment requires careful alignment of the fiber axes of adjacent fiber optic components as those components are spliced together. In this embodiment, the two eigenpolarizations at the output of the SFS carry slightly different spectra, because of polarization dependent gain, but these two spectra are independent of external perturbation of the fiber birefringence, so that the spectrum (which may be input to a gyroscope), as well as the spectrum mean wavelength, are stable.

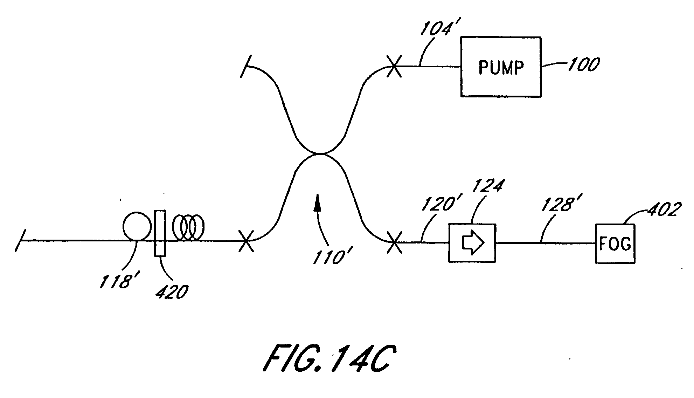

FIGURE 14B illustrates an embodiment in which the doped fiber 118" comprises a single-polarization fiber. Careful alignment of the fiber 128' with respect to an input polarizer (not shown) within the fiber optic gyroscope 402 is required. Alternatively, an additional polarizer 420 may be positioned within the fiber 118', as indicated in FIGURE 14C. The optimum location of the additional polarizer 420 can be calculated in accordance with U.S. Patent No. 5,701,318 to M. Digonnet et al. The single-polarization fiber embodiment and the embodiment of FIGURE 14C produce superfluorescent outputs that are essentially linearly polarized, but with a power that is nominally the same as an unpolarized configuration. Thus, with the embodiment of FIGURE 14C, for example, the power delivered through the input polarizer of the fiber optic gyroscope 402 is effectively doubled.

In FIGURES 14A, 14B, and 14C, the polarization state of light traveling throughout the fiber (118', 118") is frozen with polarization-maintaining or single-polarization fiber, and the problem of pump polarization drift that prevails in non-polarization maintaining SFSs is substantially eliminated.

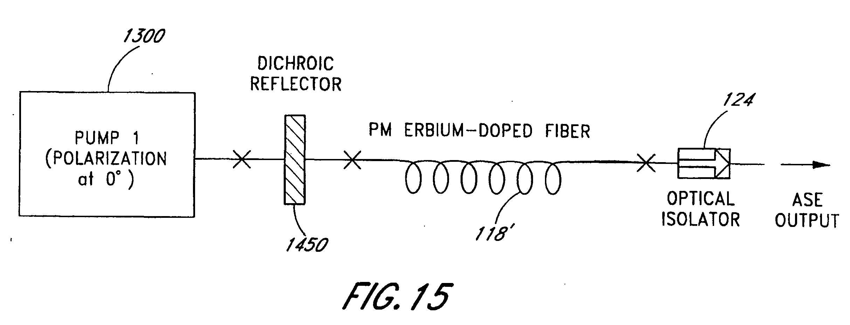

A double-pass configuration which utilizes polarization maintaining components is shown in FIGURE 15. In this embodiment, the WDM coupler 110' of FIGURES 14A-C is replaced with a dichroic reflector 1450 which is positioned between the pump source 1300 and the EDF 118'. The light emitted by the pump source 1300 is linearly polarized and launched along either one of the two birefringence axes of the PM erbium-doped fiber 118'. An optical isolator 124 is placed at the output end of the erbium-doped fiber 118' to prevent reflected light (for example, from an optical system into which the output from the EDF 118' is coupled) from causing the EDF to oscillate. The isolator 124 is advantageously made with PM fiber, and its birefringence axes are aligned with the birefringence axes of the erbium-doped fiber 118' in order to preserve the polarization of the output light. By eliminating the need for a WDM coupler, the cost of the device is reduced, and a shorter fiber 118' and a lower pump power is required than the embodiment of FIGURE 14A. When the embodiment of FIGURE 15 is used as a light source for a fiber optic gyroscope, its output polarization should be aligned with the polarizer at the input of the gyroscope circuit.

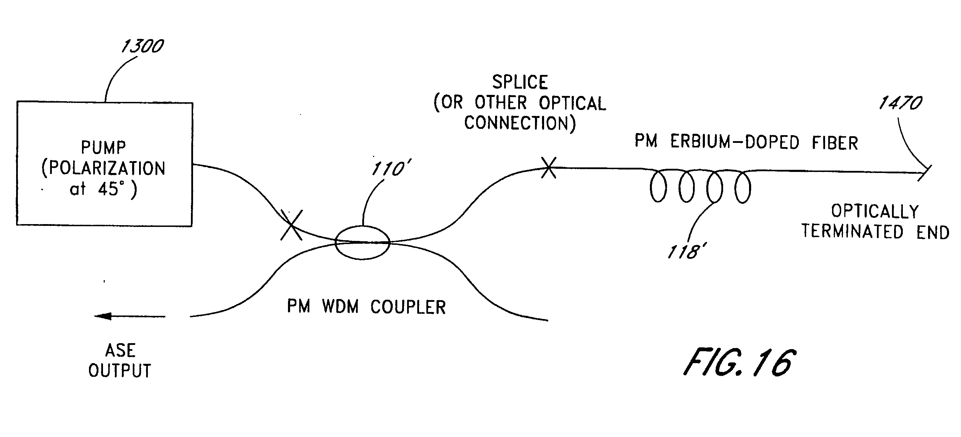

A backward output configuration utilizing PM fibers is shown in FIGURE 16. The main difference between this embodiment and the configuration of FIGURE 14A is that the output pigtail 1464 of the PM WDM coupler 110' is coupled (e.g., spliced) to the PM erbium doped fiber 118' so that the birefringence axes of the PM WDM coupler 110' are aligned at 45 degrees with respect to the birefringence axes of the PM erbium-doped fiber. Upon exiting the WDM coupler 110', the pump light enters the PM erbium-doped fiber 118'. As in the case of FIGURE 14A, one end 1470 of the pump output end of the EDF 118' of FIGURE 16 is optically terminated, e.g., by polishing or cleaving the fiber end at an angle or splicing it to a coreless fiber, or by coupling it to an optical isolator (not shown).

Since the pump light is launched with equal power into the birefringence axes of the EDF 118', the state of polarization (SOP) of the pump light varies periodically along the EDF 118', with a period Lb that depends on the fiber birefringence but that is typically in the range of a few mm or less. Similarly, the SOP of every frequency component of the ASE signal traveling in the fiber 118' also varies periodically along the EDF 118', with a period L_{b}' that is different from L_{b} (primarily because the pump and the signal have different wavelengths). Thus, at some periodic locations along the EDF 118', the pump light and a given frequency component of the ASE signal have parallel (linear or circular) polarizations, while at other, likewise periodic locations along the EDF 118', the pump light and the given frequency component of the ASE signal have orthogonal (linear or circular) polarizations. If the period is short enough, namely much shorter than the length of the fiber 118', this given frequency component will experience gain due to pump light that is polarized alternately parallel and orthogonal to this frequency component. Consequently, the variations in gain arising from variations in the polarization of the pump light along the EDF 118' are averaged out, and this given frequency component of the ASE signal does not experience PDG. Since this argument holds for every frequency component of the broadband ASE signal, the source of FIGURE 16 does not experience PDG, and the device of FIGURE 16 emits broadband ASE light having the same mean wavelength for all polarizations.

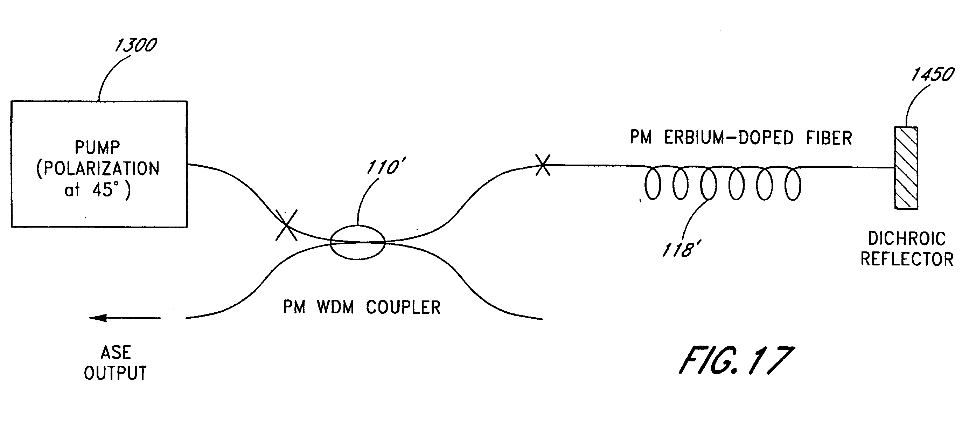

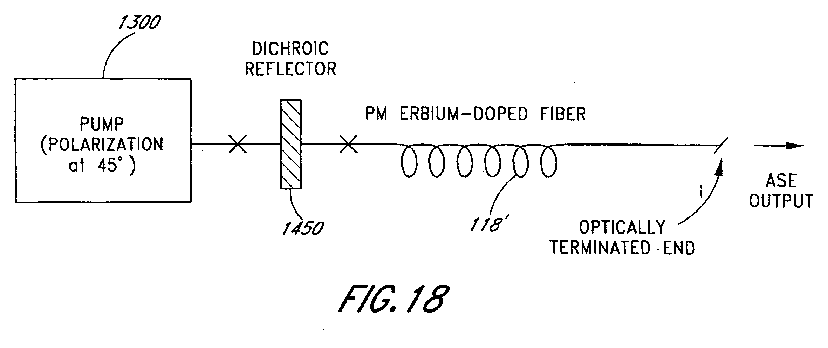

This principle can be extended to a double-pass source configuration by adding a dichroic reflector 1450 at the pump output end of the EDF 118'. As illustrated in FIGURE 17, an advantage of such a configuration over the one of FIGURE 16 is that the double-pass feature of FIGURE 17 permits a lower pump power and a shorter length of erbium-doped fiber 118'. If need be, an optical isolator (not shown) can advantageously be placed between the pump source 1300 and the WDM coupler 110' in order to prevent lasing of the EDF 118' resulting from optical feedback between the dichroic reflector 1450 and optics in the laser 1300 (e.g., the output facet of a semiconductor laser.) Another double-pass embodiment is shown in FIGURE 18, in which a dichroic reflector 1450 is placed between the pump source 1300 and the EDF 118', thereby eliminating the need for a WDM coupler and reducing the cost of the device.

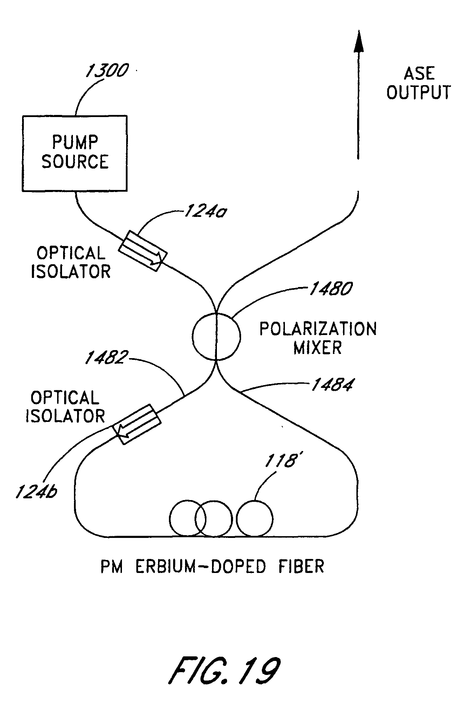

FIGURE 19 shows another SFS embodiment whose output has a mean wavelength that is stable with respect to variations in pump polarization and environmental perturbations of the circuit fiber. All of the optical components of FIGURE 19 are advantageously made from PM fiber. Unlike the embodiment of, for example, FIGURE 13A, the embodiment shown in FIGURE 19 utilizes one rather than two pump sources. Linearly polarized light from a pump source 1300 is sent through a first optical isolator 124a into a WDM polarization coupler 1480, which directs the pump light to one of two output ports 1482, 1484. The polarization coupler 1480 operates such that (1) a certain fraction of the pump light incident upon the mixer 1480 is coupled to the left output port 1482, with this fraction of the pump light having a power P₁ and a polarization that is linear, e.g., in the plane of FIGURE 19; and (2) the remaining pump light is coupled to the right output port 1484, and has a power P₂ and a linear polarization that is orthogonal to the light entering the left output port 1482, i.e., perpendicular to the plane of FIGURE 19 in this example. Thus, the EDF 118' is pumped bidirectionally by pump signals that are orthogonally polarized with respect to each other. The coupling ratio of the mixer 1480, i.e., the ratio P₂/(P₁ + P₂), is selected so that the ASE output from the right side of the EDF 118' has a Δ of 0 (i.e., a mean wavelength that does not vary with the polarization of the pump light), in accordance with the methodology discussed in connection with FIGURES 13A, B, and C. The polarization mixer 1480 should be such that it couples nominally 0% of the ASE signal in a polarization dependent manner. In this case, the ASE output from the left hand side of the EDF 118' will in general have a non-zero Δ, but a second optical isolator 124b prevents this signal from reaching the mixer 1480, which would otherwise leak through the mixer 1480 and combine with the ASE output from the right side of the EDF 118' to produce an undesirably phase sensitive output spectrum having a non-zero Δ.

One advantage of the embodiment of FIGURE 19 is that only a single pump source 1300 is required. This results in lower cost and avoids a problem that may arise when two pump sources are used, namely, the pump sources may "age" at different rates. If, in the embodiment of FIGURE 13A, for example, the output powers of the two pump sources 1410 and 1420 deteriorate over time at different rates, then Δ will vary over time. On the other hand, as the pump source 1300 in the embodiment of FIGURE 19 ages, both P₁ and P₂ will drop over time, but their ratio will remain unchanged which tends to mitigate any changes in Δ.

A further embodiment of the invention is based on the same principle as FIGURES 16, 17, and 18. The EDF still exhibits a strong birefringence, but this time the EDF is made of a standard, low-birefringence fiber (i.e., a non-PM fiber) and the birefringence is induced by bending the EDF around a mandrel with a small enough diameter. The resulting EDF coil exhibits a linear birefringence with two proper axes, one perpendicular to the plane of the coil and the other one parallel to the plane of the coil. The polarized pump is launched into the coil with its polarization such that equal power is launched into each of these axes. As in the embodiment of FIGURE 16, for example, because the beat length of this birefringent coil depends on wavelength, the polarization of the pump and the polarization of the ASE signal evolve periodically along the fiber, with different periods. Consequently, the ASE signal overlaps periodically with a pump that is orthogonal to it, then parallel to it, which reduces PDG. For the reduction in PDG to be substantial, the beat length must be short compared to the strong-signal absorption length of the EDF, i.e., the bending radius must be small enough. Another embodiment of the same concept is to wrap the fiber in a coil, but also twist the fiber on itself.

Although preferred embodiments of the present invention have been described in detail above, it will be understood by those of ordinary skill in the art that certain obvious modifications and departures from the embodiments described herein can be made without departing from the essential characteristics of the invention. For example, in the embodiments disclosed herein, it is understood that some or all of the optical components that make up the embodiments can be replaced by equivalent integrated optic components performing the same function, including, but not limited to, the polarization-maintaining fibers, the depolarizers, the fiber couplers, the isolators, and the erbium-doped fibers. An erbium-doped fiber can be replaced by an integrated optic waveguide based on silica or other materials, having an appropriate length and erbium concentration. As another example, the fiber couplers disclosed herein may be constructed with integrated optic waveguides using well-known technology. Care should be taken to design this coupler so that it exhibits the appropriate properties, e.g., Type II polarization dependence.

## Claims

1. A superfluorescent source comprising an optical pump source (100) and a solid state laser medium (118) pumped by the optical pump source (100), the superfluorescent source **characterized by**:
the optical pump source (100) generating substantially unpolarized optical radiation; and
the solid state laser medium (118) being responsive to the substantially unpolarized optical radiation from the optical pump source (100) to have low polarization-dependent gain and to generate superfluorescence having a full width at half maximum (FWHM) of at least 2 nm and a mean wavelength that is stable to within 50 ppm against polarization fluctuations in the superfluorescent source.

2. The superfluorescent source of Claim 1, wherein the superfluorescence from the medium is generated by rare earth ions.

3. The superfluorescent source of Claim 3, wherein the superfluorescence from the medium is generated by erbium ions.

4. The superfluorescent source of Claim 3, comprising an optical coupling element (110) that couples the optical radiation to the medium.

5. The superfluorescent source of Claim 4, wherein the optical coupling (110) element is a wavelength division multiplexing (WDM) coupler.

6. The superfluorescent source of Claim 1, comprising an isolator (124) to reduce optical feedback.

7. A superfluorescent device comprising the superfluorescent source of Claim 1 and further comprising a fiber optic gyroscope (402), wherein the superfluorescence of the superfluorescent source (100) is input into the gyroscope (402).

8. The superfluorescent source of Claim 1, wherein the optical pump source (100) comprises:
a laser (100); and
a depolarizer (300).

9. The superfluorescent source of Claim 8, wherein the depolarizer (300) is a Lyot depolarizer.

10. The superfluorescent source of Claim 8, wherein the depolarizer (300) includes a PZT modulator.

11. The superfluorescent source of Claim 8, further comprising a second depolarizer (302) on the output side of the laser medium (118).

12. The superfluorescent source of Claim 1, wherein the superfluorescence has a mean wavelength that is stable to within 3 ppm against fluctuations in the superfluorescent source.

13. The superfluorescent source of Claim 8, wherein the laser (100) includes a laser diode.

14. The superfluorescent source of Claim 1, wherein the solid state medium (118) comprises an optical waveguide.

15. The superfluorescent source of Claim 1, wherein the solid state medium (118) comprises an optical fiber.

16. The superfluorescent source of Claim 1, wherein the mean wavelength is stable to within 50 ppm against birefringence changes in the superfluorescent source.

17. The superfluorescent source of Claim 1, wherein the mean wavelength is stable to within 50 ppm against polarization changes of the optical radiation from the optical pump source (100).

18. The superfluorescent source of Claim 1, wherein the optical pump source comprises a plurality of pumps (1300, 1310), the plurality of pumps having outputs with polarizations selected such that the optical radiation from the optical pump source is substantially unpolarized.

19. The superfluorescent source of Claim 18, wherein the plurality of pumps includes two pumps (1300, 1310) whose respective optical outputs are combined so that the polarizations of the outputs are orthogonal to each other.

20. The superfluorescent source of Claim 1, wherein the superfluorescence has a full width at half maximum (FWHM) of at least 2 nm and a mean wavelength that is stable to within 50 ppm against polarization changes in the superfluorescent source that range over the Poincaire sphere.

21. A superfluorescent source comprising an optical pump source and a solid state laser medium (118), the superfluorescent source **characterized by**:
the optical pump source generating optical radiation that is substantially unpolarized, the optical pump source comprising:
a plurality of pumps (1300, 1310) that generate respective optical outputs;
a polarization mixer (1330) that receives the respective optical outputs from the plurality of pumps (1300, 1310) and generates optical output, wherein the respective optical outputs from the plurality of pumps (1300, 1310) have polarizations selected such that optical output from the mixer (1330) is substantially unpolarized; and
a depolarizer (1460) that receives the optical output from the polarization mixer (1330);
and
the solid state laser medium (118) being pumped by the output from the depolarizer (1330), the solid state medium (118) generating superfluorescence having a full width at half maximum (FWHM) of at least 2 nm and a mean wavelength that is stable against polarization fluctuations in the superfluorescent source.

22. The superfluorescent source of 21, further comprising a dichroic reflector (1450) between the depolarizer (1460) and the medium (118).

23. The superfluorescent source of Claim 21, wherein the mean wavelength is stable to within 500 ppm against polarization fluctuations in the superfluorescent source.

24. The superfluorescent source of Claim 21, wherein the mean wavelength is stable to within 100 ppm against polarization fluctuations in the superfluorescent source.

25. The superfluorescent source of Claim 21, wherein the mean wavelength is stable to within 50 ppm against polarization fluctuations in the superfluorescent source.

26. The superfluorescent source of Claim 21, wherein the mean wavelength is stable to within 3 ppm against polarization fluctuations in the superfluorescent source.

27. The superfluorescent source of Claim 21, wherein the plurality of pumps includes two pumps (1300, 1310) having respective optical outputs combined so that the polarizations of the outputs are orthogonal to each other.

28. The superfluorescent source of Claim 21, wherein the superfluorescence from the medium (118) is generated by erbium ions.

29. The superfluorescent source of Claim 21, wherein the superfluorescence from the laser medium (118) is generated by rare earth ions.

30. The superfluorescent source of Claim 21, further comprising an isolator (124) to reduce optical feedback.

31. A superfluorescent device comprising the superfluorescent source of Claim 21 and further comprising a fiber optic gyroscope (402), wherein the superfluorescence of the superfluorescent source is input into the gyroscope (402).

32. The superfluorescent source of Claim 21, wherein the plurality of pumps (1300, 1310) comprise lasers.

33. The superfluorescent source of Claim 21, wherein the depolarizer (1460) is a Lyot depolarizer.

34. The superfluorescent source of Claim 21, wherein the depolarizer (1460) includes a PZT modulator.

35. The superfluorescent source of Claim 21, wherein the solid state medium (118) comprises an optical waveguide.

36. The superfluorescent source of Claim 21, wherein the solid state medium (118) comprises an optical fiber.

37. The superfluorescent source of Claim 21, wherein the mean wavelength is stable to within 500 ppm against birefringence changes in the superfluorescent source.

38. The superfluorescent source of Claim 21, wherein the mean wavelength is stable to within 500 ppm against polarization changes of the optical radiation from the optical pump source.

39. The superfluorescent source of Claim 21, further comprising a dichroic reflector (1450) between the depolarizer (1460) and the medium (118), the reflector reflecting backward traveling optical radiation from the medium back through the medium.

40. A method of generating superfluorescence by applying the output of an optical pump source to a laser medium, the method **characterized by** the steps of:
providing a plurality of optical pumps (1300, 1310), the pumps (1300, 1310) having respective optical outputs with different polarizations;
directing the respective optical outputs through a polarization mixer (1330) that produces optical output, wherein the different polarizations are selected so that the optical output from the mixer (1330) is substantially unpolarized;
depolarizing the output from the mixer (1330);
injecting the depolarized output into a solid state laser medium (118); and
producing superfluorescence from the medium (118), the medium being responsive to the depolarized output to produce the superfluorescence with a mean wavelength that is stable against polarization fluctuations in the superfluorescent source.

41. The method of Claim 40, wherein the wavelength is stable to within 500 ppm against polarization fluctuations in the superfluorescent source.

42. The method of Claim 40, wherein the superfluorescence has a full width at half maximum (FWHM) of at least 2 nm.

43. The method of Claim 40, wherein the depolarizing includes directing the output from the mixer (1330) through a depolarizer (1460).

44. The method of Claim 40, wherein the plurality of optical pumps includes two pumps (1300, 1310) having respective optical outputs whose polarizations are orthogonal to each other.

45. The method of Claim 40, wherein the solid state medium (118) includes rare earth ions.

46. A method of generating superfluorescence by pumping a laser medium with the output of an optical pump, the method **characterized by** the steps of:
providing a laser medium (118) having first and second ends;
pumping the first end of the medium (118') with optical output from a first optical pump (1410), the output from the first optical pump (1410) having a first power and a first polarization;
pumping the second end of the medium (118') with optical output from a second optical pump (1420), the output from the second optical pump (1420) having a second power and a second polarization different from the first polarization;
producing optical output from the first end of the medium (118'), optical output comprising:
a first spectral component having a first mean wavelength and a polarization parallel to the first polarization; and
a second spectral component having a second mean wavelength and a polarization orthogonal to the first polarization;
and
selecting the first pump power and the second pump power so as to substantially reduce the polarization dependent gain that would be present if the first power were equal to the second power, so that the difference between the mean wavelength of the first spectral component and the mean wavelength of the second spectral component is substantially reduced.

47. The method of Claim 46, wherein the first polarization and the second polarization are orthogonal.

48. The method of Claim 46, wherein the second power is selected to be less than the first power.

49. The method of Claim 46, wherein the medium (118) is a solid state medium.

50. The method of Claim 49, wherein the medium (118) includes a rare earth element.

51. The method of Claim 49, wherein the medium (118) includes erbium.

52. The method of Claim 46, comprising coupling the respective outputs from the first and second optical pumps (1410, 1420) to the medium (118).

53. The method of Claim 52, wherein the respective outputs are coupled to the medium (118) with polarization maintaining fiber.

54. The method of Claim 46, comprising directing the optical output from the first end of the medium (118) through an optical isolator (1430).

55. The method of Claim 46, wherein the optical pumps (1410, 1420) comprise laser diodes.

56. The method of Claim 46, comprising directing the optical output from the first end of the medium (118) towards a fiber optic gyroscope (402).

57. A device that includes a superfluorescent source comprising an optical pump and a solid state laser medium, the device **characterized by**:
an optical pump (1300) that produces polarized optical output;
a solid state laser medium (118') that receives the polarized optical output, the medium (118') having first and second birefringence axes that each receive equal amounts of pump power to reduce polarization dependent gain effects within the medium (118'), the medium (118') producing optical output that has substantially the same mean wavelength for all polarizations; and
a fiber optic gyroscope (402) that receives the optical output from the medium (118').

58. The device of Claim 57, wherein the birefringence axes are oriented at about 45 degrees with respect to the polarization of the polarized optical output.

59. A method of generating superfluorescent optical output using an optical source and a solid state medium, the method **characterized by**:
outputting a polarized optical signal from the pump source (1300), the polarized optical signal having a polarization axis;
inputting the polarized optical signal into a solid state laser medium (118') that has birefringence axes; and
orienting the birefringence axis of the solid state medium (118') at about 45 degrees with respect to the polarization axis of the polarized optical output to reduce polarization dependent gain effects within the medium (118') such that the solid state medium (118') produces a superfluorescent optical output that has substantially the same mean wavelength for all polarizations.

60. A method of generating superfluorescent output from a superfluorescence source using an optical pump and a solid state laser medium, the method **characterized by**:
providing an optical pump (1300) which generates optical output;
directing the optical output from the optical pump (1300) into a polarization mixer (1480) which generates a first output signal and a second output signal, the two output signals having respective intensities and different polarizations;
directing the first output signal into a first end of a solid state laser medium (118');
directing the second output signal into a second end of the medium (118'); and
producing optical gain in the solid state medium (118') that is substantially independent of polarization to generate optical output from one end of the solid state medium (118') whose mean wavelength is stable against polarization fluctuations in the superfluorescent source.

61. The method of Claim 60, wherein gain that is substantially independent of polarization is produced by selecting the intensities of the first and second output signals.

62. The method of Claim 60, wherein the optical pump (1300) is a single optical pump (1300).

63. The method of Claim 60, comprising providing an optical isolator (124b) to block output from the other end of the medium (118').

## Patentansprüche

1. Superfluoreszenz-Quelle, umfassend eine optische Pumpquelle (100) und ein Festkörper-Lasermedium (118), das von der optischen Pumpquelle (100) gepumpt wird, wobei die Superfluoreszenz-Quelle **dadurch gekennzeichnet ist, dass**:
die optische Pumpquelle (100) eine im Wesentlichen nicht polarisierte optische Strahlung erzeugt; und
das Festkörper-Lasermedium (118) auf die im Wesentlichen nicht polarisierte optische Strahlung von der optischen Pumpquelle (100) anspricht, um eine niedrige Polarisations-abhängige Verstärkung aufzuweisen und um eine Superfluoreszenz zu erzeugen, die eine volle Breite bei dem halben Maximum (FWHM) von wenigstens 2 nm und eine mittlere Wellenlänge aufweist, die gegenüber Polarisationsschwankungen in der Superfluoreszenz-Quelle innerhalb von 50 ppm stabil ist.

2. Superfluoreszenz-Quelle nach Anspruch 1, wobei die Superfluoreszenz von dem Medium durch Edelerden-Ionen erzeugt wird.

3. Superfluoreszenz-Quelle nach Anspruch 1, wobei die Superfluoreszenz von dem Medium durch Erbium-Ionen erzeugt wird.

4. Superfluoreszenz-Quelle nach Anspruch 3, umfassend ein optisches Kopplungselement (110), das die optische Strahlung mit dem Medium koppelt.

5. Superfluoreszenz-Quelle nach Anspruch 4, wobei das optische Kopplungselement (110) ein Wellenlängen-Multiplexierungskoppler (WDM) ist.

6. Superfluoreszenz-Quelle nach Anspruch 1, umfassend einen Isolator (124) zum Reduzieren einer optischen Rückkopplung.

7. Superfluoreszenz-Einrichtung, umfassend die Superfluoreszenz-Quelle nach Anspruch 1 und ferner umfassend ein faseroptisches Gyroskop (402), wobei die Superfluoreszenz der Superfluoreszenz-Quelle (100) in das Gyroskop (402) eingegeben wird.

8. Superfluoreszenz-Quelle nach Anspruch 1, wobei die optische Pumpquelle (100) umfasst:
einen Laser (100);
einen Depolarisierer (300).

9. Superfluoreszenz-Quelle nach Anspruch 8, wobei der Depolarisierer (300) ein Lyot-Depolarisierer ist.

10. Superfluoreszenz-Quelle nach Anspruch 8, wobei der Depolarisierer (300) einen PZT-Modulator umfasst.

11. Superfluoreszenz-Quelle nach Anspruch 8, ferner umfassend einen zweiten Depolarisierer (302) auf der Ausgangsseite des Lasermediums (118).

12. Superfluoreszenz-Quelle nach Anspruch 1, wobei die Superfluoreszenz eine mittlere Wellenlänge aufweist, die gegenüber Schwankungen in der Superfluoreszenz-Quelle auf innerhalb 3 ppm stabil ist.

13. Superfluoreszenz-Quelle nach Anspruch 8, wobei der Laser (100) eine Laserdiode umfasst.

14. Superfluoreszenz-Quelle nach Anspruch 1, wobei das Festkörpermedium (118) einen optischen Wellenleiter umfasst.

15. Superfluoreszenz-Quelle nach Anspruch 1, wobei das Festkörpermedium (118) eine optische Faser umfasst.

16. Superfluoreszenz-Quelle nach Anspruch 1, wobei die mittlere Wellenlänge gegenüber Doppelbrechungsänderungen in der Superfluoreszenz-Quelle auf innerhalb 50 ppm stabil ist.

17. Superfluoreszenz-Quelle nach Anspruch 1, wobei die mittlere Wellenlänge gegenüber Polarisationsänderungen der optischen Strahlung von der optischen Pumpquelle (100) auf innerhalb 50 ppm stabil ist.

18. Superfluoreszenz-Quelle nach Anspruch 1, wobei die optische Pumpquelle eine Vielzahl von Pumpen (1300, 1310) umfasst, wobei die Vielzahl von Pumpen Ausgänge mit Polarisationen aufweisen, die so gewählt sind, dass die optische Strahlung von der optischen Pumpquelle im Wesentlichen nicht polarisiert ist.

19. Superfluoreszenz-Quelle nach Anspruch 18, wobei die Vielzahl von Pumpen zwei Pumpen (1300, 1310) umfassen, deren jeweilige optische Ausgänge kombiniert sind, sodass die Polarisationen der Ausgänge orthogonal zueinander sind.

20. Superfluoreszenz-Quelle nach Anspruch 1, wobei die Superfluoreszenz eine volle Breite bei einem halben Maximum (FWHM) von wenigstens 2 nm und eine mittlere Wellenlänge aufweist, die gegenüber Polarisationsänderungen in der Superfluoreszenz-Quelle, die sich über die Poincaire-Kugel erstrecken, auf innerhalb von 50 ppm stabil ist.

21. Superfluoreszenz-Quelle, umfassend eine optische Pumpquelle und ein Festkörper-Lasermedium (118), wobei die Superfluoreszenz-Quelle **dadurch gekennzeichnet ist, dass**:
die optische Pumpquelle eine optische Strahlung erzeugt, die im Wesentlichen nicht polarisiert ist, wobei die optische Pumpquelle umfasst:
eine Vielzahl von Pumpen (1300, 1310), die jeweilige optische Ausgänge erzeugen;
einen Polarisationsmischer (1330), der die jeweiligen optischen Ausgänge von der Vielzahl von Pumpen (1300, 1310) empfängt und einen optischen Ausgang erzeugt, wobei die jeweiligen optischen Ausgänge von der Vielzahl von Pumpen (1300, 1310) Polarisationen aufweisen, die so gewählt sind, dass der optische Ausgang von dem Mischer (1330) im Wesentlichen nicht polarisiert ist; und
einen Depolarisierer (1460), der den optischen Ausgang von dem Polarisationsmischer (1330) empfangt;
das Festkörper-Lasermedium (118) durch den Ausgang von dem Depolarisierer (1330) gepumpt wird, wobei das Festkörpermedium (118) eine Superfluoreszenz mit einer vollen Breite bei einem halben Maximum (FWHM) von wenigstens 2 nm und einer mittleren Wellenlänge, die gegenüber Polarisationsschwankungen in der Superfluoreszenz-Quelle stabil ist, aufweist.

22. Superfluoreszenz-Quelle nach Anspruch 21, ferner umfassend einen dichroitischen Reflektor (1450) zwischen dem Depolarisierer (1460) und dem Medium (118).

23. Superfluoreszenz-Quelle nach Anspruch 21, wobei die mittlere Wellenlänge gegenüber Polarisationsschwankungen in der Superfluoreszenz-Quelle auf innerhalb von 500 ppm stabil ist.

24. Superfluoreszenz-Quelle nach Anspruch 21, wobei die mittlere Wellenlänge gegenüber Polarisationsschwankungen in der Superfluoreszenz-Quelle auf innerhalb von 100 ppm stabil ist.

25. Superlluoreszenz-Quelle nach Anspruch 21, wobei die mittlere Wellenlänge gegenüber Polarisationsschwankungen in der Superfluoreszenz-Quelle auf innerhalb von 50 ppm stabil ist.

26. Superfluoreszenz-Quelle nach Anspruch 21, wobei die mittlere Wellenlänge gegenüber Polarisationsschwankungen in der Superfluoreszenz-Quelle auf innerhalb von 3 ppm stabil ist.

27. Superfluoreszenz-Quelle nach Anspruch 21, wobei die Vielzahl von Pumpen zwei Pumpen (1300, 1310) umfassen, deren jeweilige optische Ausgänge so kombiniert sind, dass die Polarisationen der Ausgänge orthogonal zueinander sind.

28. Superfluoreszenz-Quelle nach Anspruch 21, wobei die Superfluoreszenz von dem Medium (118) durch Erbium-Ionen erzeugt wird.

29. Superfluoreszenz-Quelle nach Anspruch 21, wobei die Superfluoreszenz von dem Lasermedium (118) durch Edelerden-Ionen erzeugt wird.

30. Superfluoreszenz-Quelle nach Anspruch 21, ferner umfassend einen Isolator (124) zum Reduzieren einer optischen Rückkopplung.

31. Superfluoreszenz-Einrichtung, umfassend die Superfluoreszenz-Quelle nach Anspruch 21 und ferner umfassend ein faseroptisches Gyroskop (402), wobei die Superfluoreszenz der Superfluoreszenz-Quelle in das Gyroskop (402) eingegeben wird.

32. Superfluoreszenz-Quelle nach Anspruch 21, wobei die Vielzahl von Pumpen (1300, 1310) Laser umfassen.

33. Superfluoreszenz-Quelle nach Anspruch 21, wobei der Depolarisierer (1460) ein Lyot-Depolarisierer ist.

34. Superfluoreszenz-Quelle nach Anspruch 21, wobei der Depolarisierer (1460) einen PZT-Modulator umfasst.

35. Superfluoreszenz-Quelle nach Anspruch 21, wobei das Festkörpermedium (118) einen optischen Wellenleiter umfasst.

36. Superfluoreszenz-Quelle nach Anspruch 21, wobei das Festkörpermedium (118) eine optische Faser umfasst.

37. Superfluoreszenz-Quelle nach Anspruch 21, wobei die mittlere Wellenlänge gegenüber Doppelbrechungsänderungen in der Superfluoreszenz-Quelle auf innerhalb von 500 ppm stabil ist.

38. Superfluoreszenz-Quelle nach Anspruch 21, wobei die mittlere Wellenlänge gegenüber Polarisationsänderungen der optischen Strahlung von der optischen Pumpquelle auf innerhalb von 500 ppm stabil ist.

39. Superfluoreszenz-Quelle nach Anspruch 21, ferner umfassend einen dichroitischen Reflektor (1450) zwischen dem Depolarisierer (1460) und dem Medium (118), wobei der Reflektor eine zurücklaufende. optische Strahlung von dem Medium zurück durch das Medium reflektiert.

40. Verfahren zum Erzeugen einer Superfluoreszenz durch Anwenden des Ausgangs einer optischen Pumpquelle auf ein Lasermedium, wobei das Verfahren durch die folgenden Schritte **gekennzeichnet** ist:
Bereitstellen einer Vielzahl von optischen Pumpen (1300, 1310), wobei die Pumpen (1300, 1310) jeweilige optische Ausgänge mit unterschiedlichen Polarisationen aufweisen;
Richten der jeweiligen optischen Ausgänge durch einen Polarisationsmischer (1330), der einen optischen Ausgang erzeugt, wobei die verschiedenen Polarisationen so gewählt sind, dass der optische Ausgang von dem Mischer (1330) im Wesentlichen nicht polarisiert ist;
Depolarisieren des Ausgangs von dem Mischer (1330);
Injizieren des depolarisierten Ausgangs in ein Festkörper-Lasermedium (118); und
Erzeugen einer Superfluoreszenz von dem Medium (118), wobei das Medium auf den depolarisierten Ausgang anspricht, um die Superfluoreszenz mit einer mittleren Wellenlänge zu erzeugen, die gegenüber von Polarisationsschwankungen in der Superfluoreszenz-Quelle stabil ist.

41. Verfahren nach Anspruch 40, wobei die Wellenlänge gegenüber Polarisationsschwankungen in der Superfluoreszenz-Quelle auf innerhalb von 500 ppm stabil ist.

42. Verfahren nach Anspruch 40, wobei die Superfluoreszenz eine volle Breite bei einem halben Maximum (FWHM) von wenigstens 2 nm aufweist.

43. Verfahren nach Anspruch 40, wobei die Depolarisierung ein Richten des Ausgangs von dem Mischer (1330) durch einen Depolarisierer (1460) umfasst.

44. Verfahren nach Anspruch 40, wobei die Vielzahl von optischen Pumpen zwei Pumpen (1300, 1310) umfassen, die jeweilige optische Ausgänge aufweisen, deren Polarisationen orthogonal zueinander sind.

45. Verfahren nach Anspruch 40, wobei das Festkörper-Medium (118) Edelerden-Ionen umfasst:

46. Verfahren zum Erzeugen einer Superfluoreszenz durch Pumpen eines Lasermediums mit dem Ausgang einer optischen Pumpe, wobei das Verfahren durch die folgenden Schritte **gekennzeichnet** ist:
Bereitstellen eines Lasermediums (118), das erste und zweite Enden aufweist;
Pumpen des ersten Ende des Mediums (118') mit einem optischen Ausgang von einer ersten optischen Pumpe (1410), wobei der Ausgang von der ersten optischen Pumpe (1410) eine erste Leistung und eine erste Polarisation aufweist;
Pumpen des zweiten Endes des Mediums (118') mit einem optischen Ausgang von einer zweiten optischen Pumpe (1420), wobei der Ausgang von der zweiten optischen Pumpe (420) eine zweite Leistung und eine zweite Polarisation aufweist, die sich von der ersten Polarisation unterscheidet;
Erzeugen eines optischen Ausgangs von dem ersten Ende des Mediums (118'), wobei der optische Ausgang umfasst:
eine erste Spektralkomponente mit einer ersten mittleren Wellenlänge und einer Polarisation parallel zu der ersten Polarisation; und
eine zweite Spektralkomponente mit einer zweiten mittleren Wellenlänge und einer Polarisation orthogonal zu der ersten Polarisation; und
Wählen der ersten Pumpleistung und der zweiten Pumpleistung so, um wesentlich die polarisationsabhängige Verstärkung zu verringern, die vorhanden sein würde, wenn die erste Leistung gleich zu der zweiten Leistung wäre, sodass die Differenz zwischen der mittleren Wellenlänge der ersten Spektralkomponente und der mittleren Wellenlänge der zweiten Spektralkomponente wesentlich verringert wird.

47. Verfahren nach Anspruch 46, wobei die erste Polarisation und die zweite Polarisation orthogonal sind.

48. Verfahren nach Anspruch 46, wobei die zweite Leistung so gewählt wird, dass sie kleiner als die erste Leistung ist.

49. Verfahren nach Anspruch 46, wobei das Medium (118) ein Festkörper-Medium ist.

50. Verfahren nach Anspruch 49, wobei das Medium (118) ein Edelerden-Element umfasst.

51. Verfahren nach Anspruch 49, wobei das Medium (118) Erbium umfasst.

52. Verfahren nach Anspruch 46, umfassend ein Koppeln der jeweiligen Ausgänge von den ersten und zweiten optischen Pumpen (1410, 1420) an das Medium (118).

53. Verfahren nach Anspruch 52, wobei die jeweiligen Ausgänge an das Medium (118) mit einer polarisationserhaltenden Faser gekoppelt werden.

54. Verfahren nach Anspruch 46, umfassend ein Richten des optischen Ausgangs von dem ersten Ende des Mediums (118) durch einen optischen Isolator (1430).

55. Verfahren nach Anspruch 46, wobei die optischen Pumpen (1410, 1420) Laserdioden umfassen.

56. Verfahren nach Anspruch 46, umfassend ein Richten des optischen Ausgangs von dem ersten Ende des Mediums (118) in Richtung auf ein faseroptisches Gyroskop (402) hin.

57. Einrichtung, die eine Superfluoreszenz-Quelle enthält, umfassend eine optische Pumpe und ein Festkörper-Lasermedium, wobei die Einrichtung **gekennzeichnet ist durch**:
ein optische Pumpe (1300) die einen polarisierten optischen Ausgang erzeugt;
ein Festkörper-Lasermedium (118'), das den polarisierten optischen Ausgang empfängt, wobei das Medium (118') erste und zweite Doppelbrechungsachsen aufweist, die jeweils gleiche Beträge einer Pumpleistung empfangen, um polarisationsabhängige Verstärkungseffekte innerhalb des Mediums (118') zu reduzieren, wobei das Medium (118') einen optischen Ausgang erzeugt, der im Wesentlichen die gleiche mittlere Wellenlänge für sämtliche Polarisationen aufweist; und
ein faseroptisches Gyroskop (402), das den optischen Ausgang von dem Medium (118') empfängt.

58. Einrichtung nach Anspruch 57, wobei die Doppelbrechungsachsen unter ungefähr 45 Grad in Bezug auf die Polarisation des polarisierten optischen Ausgangs orientiert sind.

59. Verfahren zum Erzeugen eines optischen Superfluoreszenz-Ausgangs unter Verwendung einer optischen Quelle und eine Festkörper-Mediums, wobei das Verfahren durch die folgenden Schritte **gekennzeichnet** ist:
Ausgeben eines polarisierten optischen Signals von der Pumpquelle (1300), wobei das polarisierte optische Signal eine Polarisationsachse aufweist;
Eingeben des polarisierten optischen Signals in ein Festkörper-Lasermedium (118'), welches Doppelbrechungsachsen aufweist; und
Orientieren der Doppelbrechungsachse des Festkörper-Mediums (118') unter ungefähr 45 Grad in Bezug auf die Polarisationsachse des polarisierten optischen Ausgangs, um polarisationsabhängige Verstärkungseffekte innerhalb des Mediums (118') zu verringern, sodass das Festkörper-Medium (118') einen optischen Superfluoreszenz-Ausgang erzeugt, der im Wesentlichen die gleiche mittlere Wellenlänge für sämtliche Polarisationen aufweist.

60. Verfahren zum Erzeugen eines Superfluoreszenz-Ausgangs von einer Superfluoreszenz-Quelle unter Verwendung einer optischen Pumpe und eines Festkörper-Lasermediums, wobei das Verfahren durch die folgenden Schritte **gekennzeichnet** ist:
Bereitstellen einer optischen Pumpe (1300), die einen optischen Ausgang erzeugt;
Richten des optischen Ausgangs von der optischen Pumpe (1300) in einen Polarisationsmischer (1480), der ein erstes Ausgangssignal und ein zweites Ausgangssignal erzeugt, wobei die zwei Ausgangssignale jeweilige Intensitäten und unterschiedliche Polarisationen aufweisen;
Richten des ersten Ausgangssignals in ein erstes Ende eines Festkörper-Lasermediums (118');
Richten des zweiten Ausgangssignals in ein zweites Ende des Mediums (118'); und
Erzeugen einer optischen Verstärkung in dem Festkörper-Medium (118'), die im Wesentlichen unabhängig von einer Polarisation ist, um einen optischen Ausgang von einem Ende des Festkörper-Mediums (118') zu erzeugen, dessen mittlere Wellenlänge gegenüber Polarisationsschwankungen in der Superfluoreszenz-Quelle stabil ist.

61. Verfahren nach Anspruch 60, wobei eine Verstärkung, die im Wesentlichen unabhängig von einer Polarisation ist, erzeugt wird, indem die Intensitäten der ersten und zweiten Ausgangssignale gewählt werden.

62. Verfahren nach Anspruch 60, wobei die optische Pumpe (1300) eine einzelne optische Pumpe (1300) ist.

63. Verfahren nach Anspruch 60, umfassend ein Bereitstellen eines optischen Isolators (124b) zum Blocken eines Ausgangs von dem anderen Ende des Mediums (118').

## Revendications

1. Une source superfluorescente comprenant une source de pompage optique (100) et un milieu laser à l'état solide (118) pompé par la source de pompage optique (100), la source superfluorescente étant **caractérisée en ce que**:
la source de pompage optique (100) génère un rayonnement optique pratiquement non polarisé; et
le milieu laser à l'état solide (118) réagit au rayonnement optique pratiquement non polarisé provenant de la source de pompage optique (100) de façon à avoir un faible gain dépendant de la polarisation et à générer une superfluorescence ayant une largeur complète à mi-hauteur (ou LMH) d'au moins 2 nm et une longueur d'onde moyenne qui est stable dans une plage de tolérance de 50 ppm vis-à-vis de fluctuations de polarisation dans la source superffuorescente.

2. La source superfluorescente de la revendication 1, dans laquelle la superfluorescence provenant du milieu est générée par des ions de terre rare.

3. La source superfluorescente de la revendication 1, dans laquelle la superfluorescence provenant du milieu est générée par des ions d'erbium.

4. La source superfluorescente de la revendication 3, comprenant un élément de couplage optique (110) qui couple le rayonnement optique au milieu.

5. La source superfluorescente de la revendication 4, dans laquelle l'élément de couplage optique (110) est un coupleur à multiplexage en longueur d'onde (ou WDM).

6. La source superfluorescente de la revendication 1, comprenant un isolateur (124) pour réduire la rétroaction optique.

7. Un dispositif superfluorescent comprenant la source superfluorescente de la revendication 1 et comprenant en outre un gyroscope à fibre optique (402), dans lequel l'émission de superfluorescence de la source superfluorescente (100) est appliquée au gyroscope (402).

8. La source superfluorescente de la revendication 1, dans laquelle la source de pompage optique (100) comprend:
un laser (100); et
un dépolariseur (300).

9. La source superfluorescente de la revendication 8, dans laquelle le dépolariseur (300) est un dépolariseur de Lyot.

10. La source superfluorescente de la revendication 8, dans laquelle le dépolariseur (300) comprend un modulateur PZT.

11. La source superfluorescente de la revendication 8, comprenant en outre un second dépolariseur (302) du côté de sortie du milieu laser (118).

12. La source superfluorescente de la revendication 1, dans laquelle la superfluorescence a une longueur d'onde moyenne qui est stable dans une plage de tolérance de 3 ppm vis-à-vis de fluctuations dans la source superfluorescente.

13. La source superfluorescente de la revendication 8, dans laquelle le laser (100) comprend une diode laser.

14. La source superfluorescente de la revendication 1, dans laquelle le milieu à l'état solide (118) comprend un guide d'ondes optiqué.

15. La source superfluorescente de la revendication 1, dans laquelle le milieu à l'état solide (118) comprend une fibre optique.

16. La source superfluorescente de la revendication 1, dans laquelle la longueur d'onde moyenne est stable avec une plage de tolérance de 50 ppm vis-à-vis de changements de biréfringence dans la source superfluorescente.

17. La source superfluorescente de la revendication 1, dans laquelle la longueur d'onde moyenne est stable dans une plage de tolérance de 50 ppm vis-à-vis de changements de polarisation du rayonnement optique provenant de la source de pompage optique (100).

18. La source superfluorescente de la revendication 1, dans laquelle la source de pompage optique comprend une multiplicité de pompes (1300, 1310), la multiplicité de pompes ayant des émissions avec des polarisations sélectionnées de façon que le rayonnement optique provenant de la source de pompage optique soit pratiquement non polarisé.

19. La source superfluorescente de la revendication 18, dans laquelle la multiplicité de pompes comprend deux pompes (1300, 1310) dont les émissions optiques respectives sont combinées de façon que les polarisations des émissions soient mutuellement orthogonales.

20. La source superfluorescente de la revendication 1, dans laquelle la superfluorescence a une largeur complète à mi-hauteur (ou LMH) d'au moins 2 nm, et une longueur d'onde moyenne qui est stable dans une plage de tolérance de 50 ppm vis-à-vis de changements de polarisation dans la source superfluorescente qui s'étendent sur la sphère de Poincaré.

21. Une source superfluorescente comprenant une source de pompage optique et un milieu laser à l'état solide (118), la source superfluorescente étant **caractérisée en ce que**:
la source de pompage optique génère un rayonnement optique qui est pratiquement non polarisé, la source de pompage optique comprenant:
une multiplicité de pompes (1300, 1310) qui génèrent des émission optiques respectives;
un mélangeur de polarisations (1330) qui reçoit les émissions optiques respectives provenant de la multiplicité de pompes (1300, 1310) et génère une émission optique, dans lequel les émissions optiques respectives provenant de la multiplicité de pompes (1300, 1310) ont des polarisations sélectionnées de façon que l'émission optique du mélangeur (1330) soit pratiquement non polarisée; et
un dépolariseur (1460) qui reçoit l'émission optique provenant du mélangeur de polarisations (1330);
et
le milieu laser à l'état solide (118) est pompé par l'émission provenant du dépolariseur (1330), le milieu à l'état solide (118) générant une superfluorescence ayant une largeur complète à mi-hauteur (LMH) d'au moins 2 nm, et une longueur d'onde moyenne qui est stable vis-à-vis de fluctuations de polarisation dans la source superfluorescente.

22. La source superfluorescente de la revendication 21, comprenant en outre un réflecteur dichroïque (1450) entre le dépolariseur (1460) et le milieu (118).

23. La source superfluorescente de la revendication 21, dans laquelle la longueur d'onde moyenne est stable dans une plage de tolérance de 500 ppm vis-à-vis de fluctuations de polarisation dans la source superfluorescente.

24. La source superfluorescente de la revendication 21, dans laquelle la longueur d'onde moyenne est stable dans une plage de tolérance de 100 ppm vis-à-vis de fluctuations de polarisation dans la source superfluorescente.

25. La source superfluorescente de la revendication 21, dans laquelle la longueur d'onde moyenne est stable dans une plage de tolérance de 50 ppm vis-à-vis de fluctuations de polarisation dans la source superfluorescente.

26. La source superfluorescente de la revendication 21, dans laquelle la longueur d'onde moyenne est stable dans une plage de tolérance de 3 ppm vis-à-vis de fluctuations de polarisation dans la source superfluorescente.

27. La source superfluorescente de la revendication 21, dans laquelle la multiplicité de pompes comprend deux pompes (1300, 1310) ayant des émissions optiques respectives combinées de façon que les polarisations des émissions soient mutuellement orthogonales.

28. La source superfluorescente de la revendication 21, dans laquelle la superfluorescence provenant du milieu (118) est générée par des ions d'erbium.

29. La source superfluorescente de la revendication 21, dans laquelle la superfluorescence provenant du milieu laser (118) est générée par des ions de terre rare.

30. La source superfluorescente de la revendication 21, comprenant en outre un isolateur (124) pour réduire la rétroaction optique.

31. Un dispositif superfluorescent comprenant la source superfluorescente de la revendication 21 et comprenant en outre un gyroscope à fibre optique (402), dans lequel la superfluorescence de la source superfluorescente est appliquée à l'entrée du gyroscope (402).

32. La source superfluorescente de la revendication 21, dans laquelle la multiplicité de pompes (1300, 1310) comprend des lasers.

33. La source superfluorescente de la revendication 21, dans laquelle le dépolariseur (1460) est un dépolariseur de Lyot.

34. La source superfluorescente de la revendication 21, dans laquelle le dépolariseur (1460) comprend un modulateur PZT.

35. La source superfluorescente de la revendication 21, dans laquelle le milieu à l'état solide (118) comprend un guide d'ondes optique.

36. La source superfluorescente de la revendication 21, dans laquelle le milieu à l'état solide (118) comprend une fibre optique.

37. La source superfluorescente de la revendication 21, dans laquelle la longueur d'onde moyenne est stable dans une plage de tolérance de 500 ppm vis-à-vis de changements de biréfringence dans la source superfluorescente.

38. La source superfluorescente de la revendication 21, dans laquelle la longueur d'onde moyenne est stable dans une plage de tolérance de 500 ppm vis-à-vis de changements de polarisation du rayonnement optique provenant de la source de pompage optique.

39. La source superfluorescente de la revendication 21, comprenant en outre un réflecteur dichroïque (1450) entre le dépolariseur (1460) et le milieu (118), le réflecteur réfléchissant vers l'arrière, à travers le milieu, le rayonnement optique qui se propage à partir du milieu.

40. Un procédé de génération de superfluorescence par l'application de l'émission d'une source de pompage optique à un milieu laser, le procédé étant **caractérisé par** les étapes suivantes:
on fournit une multiplicité de pompes optiques (1300, 1310), les pompes (1300, 1310) ayant des émissions optiques respectives avec différentes polarisations;
on dirige les émissions optiques respectives à travers un mélangeur de polarisations (1330) qui produit une émission optique, les différentes polarisations étant sélectionnées de façon que l'émission optique qui provient du mélangeur (1330) soit pratiquement non polarisée;
on dépolarise l'émission provenant du mélangeur (1330);
on injecte l'émission dépolarisée dans un milieu laser à l'état solide (118); et
on produit une superfluorescence à partir du milieu (118), le milieu réagissant à l'émission dépolarisée en produisant la superfluorescence avec une longueur d'onde moyenne qui est stable vis-à-vis de fluctuations de polarisation dans la source superfluorescente.

41. Le procédé de la revendication 40, dans lequel la longueur d'onde est stable à l'intérieur d'une plage de 500 ppm vis-à-vis de fluctuations de polarisation dans la source superfluorescente.

42. Le procédé de la revendication 40, dans lequel la superfluorescence a une largeur complète à mi-hauteur (LMH) d'au moins 2 nm.

43. Le procédé de la revendication 40, dans lequel la dépolarisation comprend l'opération consistant à faire passer à travers un dépolariseur (1460) l'émission provenant du mélangeur (1330).

44. Le procédé de la revendication 40, dans lequel la multiplicité de pompes optiques comprend deux pompes (1300, 1310) ayant des émissions optiques respectives dont les polarisations sont orthogonales l'une à l'autre.

45. Le procédé de la revendication 40, dans lequel le milieu à l'état solide (118) contient des ions de terre rare.

46. Un procédé de génération de supertluorescence par pompage d'un milieu laser avec l'émission d'une pompe optique, le procédé étant **caractérisé par** les étapes suivantes:
on fournit un milieu laser (118) ayant des première et seconde extrémités;
on pompe la première extrémité du milieu (118') avec une émission optique provenant d'une première pompe optique (1410), l'émission de la première pompe optique (1410) ayant une première puissance et une première polarisation;
on pompe la seconde extrémité du milieu (118') avec une émission optique d'une seconde pompe optique (1420), l'émission de la seconde pompe optique (1420) ayant une seconde puissance et une seconde polarisation différente de la première polarisation;
on produit une émission optique à partir de la première extrémité du milieu (118'), cette émission optique comprenant:
une première composante spectrale ayant une première longueur d'onde moyenne et une polarisation parallèle à la première polarisation; et
une seconde composante spectrale ayant une seconde longueur d'onde moyenne et une polarisation orthogonale à la première polarisation; et
on sélectionne la première puissance de pompe et la seconde puissance de pompe de façon à réduire notablement le gain dépendant de la polarisation qui serait présent si la première puissance était égale à la seconde puissance, de façon que la différence entre la longueur d'onde moyenne de la première composante spectrale et la longueur d'onde moyenne de la seconde composante spectrale soit notablement réduite.

47. Le procédé de la revendication 46, dans lequel la première polarisation et la seconde polarisation sont orthogonales.

48. Le procédé de la revendication 46, dans lequel la seconde puissance est sélectionnée de façon à être inférieure à la première puissance.

49. Le procédé de la revendication 46, dans lequel le milieu (118) est un milieu à l'état solide.

50. Le procédé de la revendication 49, dans lequel le milieu (118) comprend un élément consistant en une terre rare.

51. Le procédé de la revendication 49, dans lequel le milieu (118) comprend de l'erbium.

52. Le procédé de la revendication 46, comprenant le couplage au milieu (118) des émissions respectives des première et seconde pompes optiques (1410, 1420).

53. Le procédé de la revendication 52, dans lequel les émissions respectives sont couplées au milieu (118) avec une fibre conservant la polarisation.

54. Le procédé de la revendication 46, comprenant l'opération consistant à diriger à travers un isolateur optique (1430) l'émission optique provenant de la première extrémité du milieu (118).

55. Le procédé de la revendication 46, dans lequel les pompes optiques (1410, 1420) comprennent des diodes lasers.

56. Le procédé de la revendication 46, comprenant l'opération consistant à diriger vers un gyroscope à fibre optique (402) l'émission optique de la première extrémité du milieu (118).

57. Un dispositif qui comprend une source superfluorescente comprenant une pompe optique et un milieu laser à l'état solide, le dispositif étant **caractérisé par**:
une pompe optique (1300) qui produit une émission optique polarisée;
un milieu laser à l'état solide (118') qui reçoit l'émission optique polarisée, le milieu (118') ayant des premier et second axes de biréfringence recevant chacun des quantités égales de puissance de pompe, pour réduire des effets de gain dépendant de la polarisation à l'intérieur du milieu (118'), le milieu (118') produisant une émission optique qui a pratiquement la même longueur d'onde moyenne pour toutes les polarisations; et
un gyroscope à fibre optique (402) qui reçoit l'émission optique provenant du milieu (118').

58. Le dispositif de la revendication 57, dans lequel les axes de biréfringence sont orientés à environ 45 degrés par rapport à la polarisation de l'émission optique polarisée.

59. Un procédé pour générer une émission optique superfluorescente en utilisant une source optique et un milieu à l'état solide, le procédé étant **caractérisé en ce que**:
on émet un signal optique polarisé à partir de la source de pompage (1300), le signal optique polarisé ayant un axe de polarisation;
on introduit le signal optique polarisé dans un milieu laser à l'état solide (118') qui a des axes de biréfringence; et
on oriente l'axe de biréfringence du milieu à l'état solide (118') à environ 45 degrés par rapport à l'axe de polarisation de l'émission optique polarisée, pour réduire des effets de gain dépendant de la polarisation à l'intérieur du milieu (118'), de façon que le milieu à l'état solide (118') produise une émission optique superfluorescente qui a pratiquement la même longueur d'onde moyenne pour toutes les polarisations.

60. Un procédé de génération d'une émission superffuorescente à partir d'une source à superfluorescence utilisant une pompe optique et un milieu laser à l'état solide, le procédé étant **caractérisé en ce que**:
on fournit une pompe optique (1300) qui génère une émission optique;
on dirige l'émission optique provenant de la pompe optique (1300) de façon à la faire entrer dans un mélangeur de polarisations (1480) qui génère un premier signal de sortie et un second signal de sortie, les deux signaux de sortie ayant des intensités respectives et des polarisations différentes;
on dirige le premier signal de sortie de façon à le faire entrer dans une première extrémité d'un milieu laser à l'état solide (118');
on dirige le second signal de sortie de façon à le faire entrer dans une seconde extrémité du milieu (118'); et
on produit un gain optique dans le milieu à l'état solide (118') qui est pratiquement indépendant de la polarisation, pour générer une émission optique à partir d'une extrémité du milieu à l'état solide (118') dont la longueur d'onde moyenne est stable vis-à-vis de fluctuations de polarisation dans la source superfluorescente.

61. Le procédé de la revendication 60, dans lequel le gain qui est pratiquement indépendant de la polarisation est produit en sélectionnant les intensités des premier et second signaux de sortie.

62. Le procédé de la revendication 60, dans lequel la pompe optique (1300) est une pompe optique unique (1300).

63. Le procédé de la revendication 60, comprenant l'incorporation d'un isolateur optique (124b) pour bloquer l'émission par l'autre extrémité du milieu (118').
